# EUROPEAN PATENT SPECIFICATION

(11) **EP 1 452 403 B1**
(45) Date of publication and mention of the grant of the patent: **23.05.2007**
(21) Application number: 04004061.0
(22) Date of filing: 23.02.2004
(51) Int. Cl.: B60R 21/16

(54) **Airbag**
Gassack
Sac gonflable

(30) Priority: 26.02.2003 JP 2003049535; 03.04.2003 JP 2003100516; 12.12.2003 JP 2003415189
(43) Date of publication of application: 01.09.2004
(73) Proprietor: TAKATA CORPORATION, Minato-ku, Tokyo 106-8510 (JP)
(72) Inventor: Hasebe, Masahiro c/o Takata Corporation, Tokyo 106-8510 (JP); Narimoto, Yukitoshi c/o Takata Corporation, Tokyo 106-8510 (JP)
(74) Representative: Banzer, Hans-Jörg

(56) References cited:
- EP-A- 1 364 838
- DE-A- 19 860 804
- FR-A- 2 131 070
- GB-A- 1 462 125
- US-A1- 2002 135 164

## Description

### [Technical Field of the Invention]

The present invention relates to an airbag and an airbag system for protecting an occupant in a car crash and so on, and more particularly, it relates to an airbag including a left airbag section and a right airbag section inflated left forward and right forward of an occupant, respectively, and an airbag system. The present invention also relates to a vehicle including the airbag system.

### [Description of the Related Art]

Japanese Unexamined Patent Application Publication No. 4-292239 discloses an airbag for protecting an occupant in a car crash and so on, including a left airbag section and a right airbag section that inflate left forward and right forward of an occupant, respectively, which are inflated by a common inflator. In this airbag, the front ends of the left airbag section and the right airbag section are joined together with a tie panel.

The airbag is housed in a casing in a folded condition and covered with a cover. When an inflator (gas generator) is activated to emit a jet of gas in a car crash, the airbag pushes the cover open to inflate forward of an occupant.

The inflator is arranged on the inside or outside of the base end of the airbag. With an airbag system in which the inflator is arranged outside the base end of the airbag, the gas spouted from the inflator is supplied into the airbag through a gas inlet on the base end of the airbag.

When the inflator is arranged inside the base end of the airbag, the whole of the inflator may be arranged in the airbag, or alternatively, part of the inflator may be arranged in the airbag. The later example includes a structure in which a pair of slit-like openings is provided to the airbag, into which a rod-like inflator is inserted, and both ends of the inflator project to the exterior of the airbag.

In US 2002/0135164 A1, an airbag according to the preamble of claim 1 is disclosed which is partitioned into a first compartment, a second compartment and a third compartment by means of baffles. In operation, gas is first emitted into the first compartment of the airbag, which resides between and is substantially or at least partially defined by parallel extending baffles. The first compartment receives gas until it is substantially filled. From the first compartment, the gas flows through passage ways into the second and third compartment, which are located left and right of the first compartment. According to one illustrated example, a recessed portion is formed between the extreme front ends of left and right side portions of the airbag.

In EP 1 364 838 A2, which constitutes state of the art according to Article 54(3) EPC, an airbag is described which comprises a left half airbag to be inflated to the front left side of an occupant and a right half airbag to be inflated to the front right side of the occupant. A tie panel connects the occupant-side front of the left and right half airbags.

In FR 2 131 070, an airbag for protecting a vehicle occupant is described. The airbag has a wall which is formed by a cylindric surface and two side panels. For guiding gas from the airbag to the outside of a vehicle cabin, extension pieces are connected to the side panels of the airbag, the extension pieces terminating in vent openings for guiding gas discharged from the airbag to the outside of the vehicle cabin.

In DE 18 960 804 A1, an airbag is described which is configured for protecting the driver of a motor vehicle. According to one described example the airbag comprises a head protection airbag and a chest airbag. The head protection airbag has bulges extending towards the rear of the vehicle. The purpose of these bulges is to provide an improved support function, in particular in case of collision at an angle.

In GB 1 462 125, inflatable protectors for motorcycles are disclosed. The inflatable protectors are formed by a single airbag or a plurality of airbags. According to one example, the protector may be formed by a single airbag which is divided by two internal flexible partitions into compartments of which the central compartment constitutes a front portion of the protector and the other two compartments constitute side portions. In the inflated state, the front portion extends in front of the head and upper torso of the motorcycle rider, and the side portions extend rearwardly from the front portion at the sides of the driver's head and shoulders. According to an alternative arrangement, the side portions have parts which arranged to curve around the back of the motorcycle rider.

### [Problems to be Solved by the Invention]

I. In an airbag disclosed in the Japanese Unexamined Patent Application Publication No. 4-292239, the interior of both of the left airbag section and the right airbag section is a single-piece hollow chamber contiguous from the base end to the front end.

Accordingly, it is an object of the present invention to provide an airbag and an airbag system having a base-end chamber connecting to the left and right hollow chambers in the airbag, the base-end chamber inflating earlier than the left and right airbags.

It is a further object of the present invention to provide an airbag and an airbag system in which the base end and the front end are divided from each other and the base end inflates earlier than the front end.

II. In an airbag disclosed in the Japanese Unexamined Patent Application Publication No. 4-292239, the front ends of the left airbag section and the right airbag section are connected to each other with a tie panel. Accordingly, upon inflation of the airbag, the tie panel receives the lateral center of the occupant body.

It is consequently a further object of the invention to provide an airbag, an airbag system, and a vehicle having the airbag system in which an inflated left airbag section receives the left chest of an occupant and the right chest section receives the right chest and the space between the inflated airbags is opposed to the lateral center of the chest of the occupant.

III. In an airbag disclosed in the Japanese Unexamined Patent Application Publication No. 4-292239, when the left airbag section and the right airbag section inflate, gas from an inflator flows more into one of the airbags, thus having the possibility that one airbag inflates later than the other airbag.

In an airbag disclosed in the Japanese unexamined Patent Application Publication No. 4-292239, the left airbag section and the right airbag section are joined with a tie panel. Accordingly, even if one of the airbags inflates later, it can be expected that the other early inflated airbag pulls the delayed airbag in the direction of inflation through the tie panel to promote its inflation. The tie panel, however, connects the front ends of the left airbag section and the right airbag section with each other. Therefore, the early inflated airbag cannot sufficiently pull the delayed airbag through the tie panel until the front end is fully inflated.

Accordingly, it is also an object of the invention to provide an airbag and an airbag system in which both of the left airbag section and the right airbag section inflate smoothly and substantially bilaterally evenly from the early stage of inflation.

### [Means for Solving the Problems]

According to the present invention, these objects are achieved by an airbag according to claim 1. The dependent claims define preferred and advantageous embodiments of the invention. The airbag is inflated with gas spouted from an inflator disposed on the base end thereof in the direction in which the front end or distal end moves away from the base end. The airbag includes a left airbag section inflated left forward of an occupant and a right airbag section inflated right forward of the occupant. A rear chamber or base-end chamber is formed at the base end of the airbag, gas from the inflator being supplied through the rear chamber or base-end chamber into the left airbag section and the right airbag section.

Gas is supplied from the base-end chamber into the left airbag section and the right airbag section. Accordingly, even if the inflator is a type of emitting gas more into one of the left-side and right airbag sections, the gas is supplied to the left airbag section and the right airbag section substantially equally to inflate them substantially evenly.

Partitioning means, e.g. a partition wall, may be provided for partitioning each of the left airbag section and the right airbag section into a base end and a front end. The partition wall has an opening for communicating the base end and the front end with each other.

With such an airbag, when the inflator is activated, the base-end chamber first inflates and the left airbag section and the right airbag section then inflate. The first inflated base-end chamber comes into contact with a component of the vehicle such as an instrument panel to become stable in position. Therefore, the left airbag section and the right airbag section become stable in position not only after completion of inflation but also in the middle of inflation.

When the left airbag section and the right airbag section are different in volume, the opening of the partition wall of the larger-volume airbag is preferably larger in area. This allows the left airbag section and the right airbag section to be inflated substantially at the same time.

According to the invention, the airbag may further include means for closing the opening until the pressure of gas in the base-end chamber reaches a predetermined level. This promotes the inflation of the base end.

The closing means is preferably a tear seam because of its simplicity.

According to the invention, the lower part of the partition wall may be separated from the base end more than the upper part. When an airbag system having the airbag with such an arrangement is installed on the upper surface of the instrument panel, the area of contact between the base end and the upper surface of the instrument panel closer to the occupant than the airbag system is large, thus making the position of the base end of the inflated airbag stable.

The airbag may also comprise means for opening the partitioning means when the pressure of gas in the base-end chamber has reached a predetermined level.

Also with such an airbag, when the inflator is activated, the base end first inflates and then the distal end inflates. The first inflated base end comes into contact with a component of the vehicle such as an instrument panel to become stable in position. Therefore, the distal end of the airbag becomes stable in position not only after completion of inflation but also in the middle of inflation.

In this case, the partitioning means is preferably a tear seam because of its simplicity.

Preferably, the airbag is formed of an inside panel extending from the distal end of the right airbag section through the respective opposing surfaces of the right airbag section and the left airbag section to the distal end of the left airbag section; a right outside panel forming the outer surface of the right airbag section; a left outside panel forming the outer surface of the left airbag section; and a base-end panel forming the base end of the airbag; wherein a base-end chamber enclosed by the base-end panel is formed, gas from the inflator being supplied through the base-end chamber into the left airbag section and the right airbag section.

The airbag according to the invention can be formed of the inside panel, the left and right outside panels, and the base-end panel, thus being easily produced. Other panels may be provided as necessary.

According to the invention, preferably, the upper rims of the left and right outside panels are connected to the upper rim of the inside panel; the lower rims of the left and right outside panels are connected to the lower rim of the inside panel; the distal ends of the left and right outside panels are connected to the distal end of the inside panel; and the base-end panel is connected to the base ends of the left and right outside panels, the base end upper-rim and the base end lower-rim of the inside panel. This arrangement facilitates the connection of the airbags by stitching.

An airbag according to the invention may further include a tether for connecting the base end of the inside panel and the base end of the base-end panel together. Providing the tether sets the position of the base end of the inside panel during inflation in position and brings the position of the base end of the inside panel close to the base end of the airbag. When the position of the base end of the inside panel is brought close to the base end of the airbag, the pocket (space) between the left airbag section and the right airbag section becomes deep.

An airbag according to the invention may further include a connection panel for connecting the base end of the left outside panel and the base end of the right outside panel together to divide the interior of the left outside panel and the interior of the right outside panel from the base-end chamber. Providing the connection panel promotes the base-end chamber to inflate more quickly and makes the position of the airbag more stable in the early stage of inflation. In general, gas can be equally supplied from the inflated base-end chamber into the left airbag section and the right airbag section.

The connection panel and the tether may be integrated to one. This simplifies the production of the airbag.

An airbag according to the invention may further include a gas bag in the base-end chamber, for receiving the gas from the inflator; wherein the gas bag may include openings for discharging the gas from the interior into the left airbag section and the right airbag section, respectively. Providing the gas bag further equalizes the gas supply to the left airbag section and the right airbag section.

In an airbag according to the invention the distal ends of the left airbag section and the right airbag section are noncontiguous; and a space opened to the occupant is formed between the distal ends of the left airbag section and the right airbag section with the airbag in an inflated state.

The distance between the extreme ends of the left airbag section and the right airbag section is from 150 mm to 450 mm with the airbag inflated; and the horizontal distance from the extreme end to the deepmost part of the space is preferably from 280 mm to 480 mm.

When the airbag with such an arrangement inflates, the left airbag section receives the left chest of the occupant and the right airbag section receives the right chest of the occupant. The left and right chests have hard strong ribs. The airbag receives and absorbs the impact to the occupant through the ribs. The airbag has a space between the distal ends of the left airbag section and the right airbag section in an inflated state. The vicinity of breast bones at the center of the occupant faces the space. Accordingly, when the body of the occupant strikes against the airbag, the vicinity of the breast bones does not receive a so large reaction force from the airbag, thus decreasing the load on the breast bones.

As the distance between the extreme ends of the left airbag section and the right airbag section is from 150 mm to 450 mm with the airbag inflated, left airbag section of the inflated airbag is opposed to the vicinity of the center of the left chest and the right airbag section is opposed to the vicinity of the center of the right chest, so that the vicinity of the breast bones of the upper half of the occupant can be securely supported by the airbag. As the horizontal distance from the extreme end to the deepmost part of the space between the left and light sections is from 280 mm to 480 mm, the load on the vicinity of the breast bones becomes sufficiently low.

Providing a tether to make the pocket between the left airbag section and the right airbag section deep may further reduce the load on the breast bones.

According to the invention, the left airbag section and the right airbag section may be inflated by a common inflator. This decreases the number of the inflators, thus reducing the production cost.

According to the invention, the intermediate portions in the direction of the inflation of part in which the left airbag section and the right airbag section face are connected with each other.

When the intermediate portions are connected together, even if one of the airbags inflates later during the inflation of the airbag, the first inflated airbag pulls the delayed airbag to promote its inflation. Moreover, since the intermediate portions in the direction of inflation of the left airbag section and the right airbag section are connected together, the first inflated bag starts to pull the other delayed airbag in the direction of inflation in the early stage in which the intermediate portion is inflated. Therefore, both of the left airbag section and the right airbag section inflate smoothly and substantially bilaterally evenly from the early stage of inflation.

According to the invention, preferably, the left and the right airbag sections are each a combination of a plurality of panels. Connecting pieces for the panels may be arranged on the outer surface of the airbag in the intermediate portions in the direction of inflation of the airbags. The connecting pieces arranged on the intermediate portions in the area where the left airbag section and the right airbag section face each other may be connected with each other. This eliminates the necessity of a tie panel for connecting the left airbag section and the right airbag section together, thus reducing the cost for producing the airbag.

The invention may further include means (such as a tether) for restricting the widths of the inflated left airbag section and right airbag section. This decreases the volume of inflation of the airbag. Also the airbag can complete inflation early even with a low-capacity inflator.

According to the invention, preferably, the left airbag section and the right airbag section are arranged so that the respective base ends inflate toward the occupant along the upper surface of an instrument panel; and the lower part of the distal end in the direction of inflation of the base end further projects from the rim of the upper surface of the instrument panel adjacent to the occupant in a state in which left airbag section and the right airbag section are inflated.

With such an arrangement, the base ends of the inflated left airbag section and right airbag section come into contact around the front of the instrument panel, thus making the position of the base ends stable during inflation.

The length of projections of the base ends of the left airbag section and the right airbag section from the rim of the upper surface of the instrument panel adjacent to the occupant is preferably 150 mm or less.

An airbag system according to the invention is preferably equipped with the airbag according to the invention and an inflator arranged at the base end of the airbag.

A vehicle according to the invention includes the airbag system according to the invention.

In the vehicle the airbag system is preferably a passenger airbag system mounted to the instrument panel of the vehicle; and the rear end of the base-end chamber of the inflated airbag is closer to the front of the vehicle than the rear end of the instrument panel in the cross direction of the vehicle.

In the following, preferred embodiments of the invention will be described in detail with reference to the drawings.

### [Brief Description of the Drawings]

Fig. 1 is a perspective view of an airbag according to an embodiment of the present invention.
Fig. 2 is a horizontal sectional view of the airbag of Fig. 1.
Fig. 3 is an exploded perspective view of the airbag of Fig. 1.
Fig. 4 is an exploded perspective view of the airbag of Fig. 1.
Fig. 5 is an exploded perspective view of an airbag according to another embodiment.
Fig. 6 is an exploded perspective view of an airbag according to another embodiment.
Fig. 7 is an exploded perspective view of an airbag according to another embodiment.
Fig. 8 is an exploded perspective view of an airbag according to another embodiment.
Fig. 9 is an exploded perspective view of an airbag according to another embodiment.
Fig. 10 is a perspective view of a gas bag used in an airbag according to another embodiment.
Figs. 11 (a) and 11(b) are schematic diagrams of an airbag according to another embodiment of the present invention.
Fig. 12 is a sectional view of the airbag of Fig. 11, taken along line II-II.
Fig. 13(a) is an exploded perspective view of the airbag of Fig. 11, and Fig. 13(b) is an enlarged diagram of an essential part thereof.
Fig. 14 is a side view of the airbag of Fig. 11, showing an inflated state in a vehicle chamber.
Figs. 15(a) and 15(b) are diagrams of a partition panel with an opening closed, according to an embodiment.
Fig. 16 is a diagram of a partition panel with an opening closed, according to another embodiment.
Fig. 17 is a side view of an airbag according to another embodiment, showing an inflated state in a vehicle chamber.
Figs. 18(a) and 18(b) are schematic diagrams of an airbag according to further another embodiment of the present invention.
Figs. 19(a) and 19(b) are diagrams of an opening of a partition panel according to another embodiment.
Figs. 20(a) and 20(b) are schematic diagrams of an airbag according to another embodiment of the present invention.
Fig. 21 is an exploded perspective view of the airbag of Fig. 20.
Fig. 22 is a sectional view of an airbag according to another embodiment of the present invention.
Fig. 23 is a perspective view of an airbag according to another embodiment of the present invention.
Fig. 24 is a sectional view of an airbag according to another embodiment of the present invention.
Fig. 25 is an explanatory diagram of the shape of an airbag according to another embodiment of the present invention.
Fig. 26 is an explanatory diagram of the shape of an airbag according to another embodiment of the present invention.
Fig. 27 is a side view of the vicinity of an instrument panel in a vehicle cabin, showing an airbag according to a preferred embodiment in an inflated state.
Fig. 28 is a perspective view showing the process of inflation of the airbag of Fig. 27.
Fig. 29 is a side view of the vicinity of an instrument panel in a vehicle cabin, showing an airbag according to another preferred embodiment in an inflated state.
Fig. 30 is a schematic diagram of an airbag according to another embodiment.
Fig. 31 is a sectional view taken along line XV-XV of Fig. 30.
Fig. 32 is an exploded view of the airbag in Fig. 30.
Fig. 33 is a side view of the vicinity of an instrument panel in a vehicle cabin, showing the airbag of Fig. 30 in an inflated state.
Fig. 34 is a schematic diagram of an airbag according to another embodiment.
Fig. 35 is a sectional view taken along line XIX-XIX of Fig. 34.
Fig. 36 is a sectional view taken along line XX-XX of Fig. 35.
Fig. 37 is an exploded view of the airbag in Fig. 34.
Fig. 38 is a schematic diagram of an airbag according to another embodiment.
Fig. 39 is a sectional view taken along line XXIII-XXIII of Fig. 38.
Fig. 40 is a sectional view taken along line XXIV-XXIV of Fig. 39.
Fig. 41 is an exploded view of the airbag in Fig. 38.
Fig. 42 is a schematic diagram of an airbag according to another embodiment.
Fig. 43 is a sectional view taken along line XXVII-XXVII of Fig. 42.
Fig. 44 is a sectional view taken along line XXVIII-XXVIII of Fig. 43.
Fig. 45 is a sectional view taken along line XXIX-XXIX of Fig. 43.
Fig. 46 is an exploded view of the airbag in Fig. 42.

### [Description of the Embodiments]

Embodiments of the present invention will be described hereinafter with reference to the drawings.

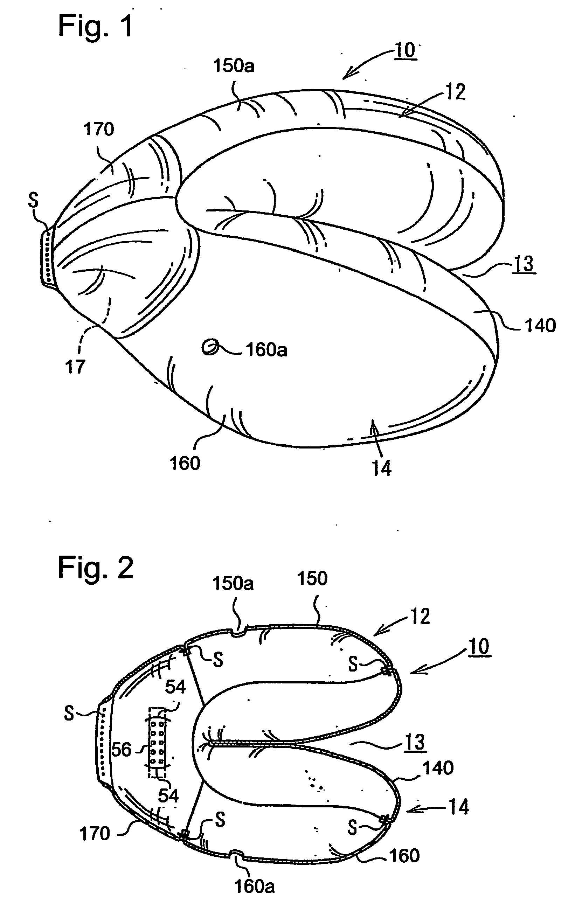

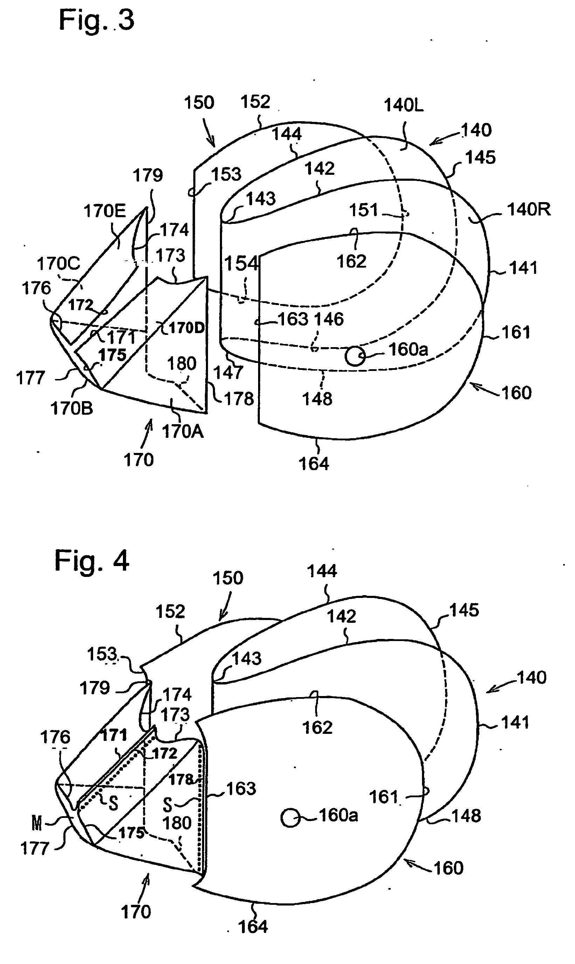

Fig. 1 is a perspective view of an airbag 10 according to an embodiment of the present invention, in an inflated state; Fig. 2 is a horizontal sectional view of the airbag 10; and Figs. 3 and 4 are exploded perspective views of the airbag 10.

The airbag 10 includes a right airbag section 12 that is inflated right forward of an occupant, a left airbag section 14 that is inflated left forward of the occupant, and a base-end chamber 17 communicating with the base ends of the right airbag section 12 and the left airbag section 14.

With the airbag 10 in an inflated state, there is no bridge member such as a tie panel between the front ends of the right airbag section 12 and the left airbag section 14, and a space 13 between the front ends of the left airbag section and the right airbag section is open to the occupant (rightward in Figs. 1 and 2).

With the airbag 10 in a fully inflated state, the distance between the forefront end of the right airbag section 12 and the forefront end of the left airbag section 14 is preferably 150 mm to 450 mm, more preferably, 170 mm to 430 mm.

The horizontal distance from the extreme end to the deepmost part of the space 13 is preferably from 280 mm to 480 mm and, particularly, from 310 mm to 450 mm.

The right airbag section 12 and the left airbag section 14 each have a vent hole 150a, 160a in the outer surface.

The panel structure of the airbag 10 will be described hereinafter. In the following description, the front (distal) end of each panel means the distal end of the airbag 10 in the inflating direction, while the rear end means the base end in the inflating direction.

The airbag 10 is formed of a total of four panels, an inside panel 140, a right outside panel 150, a left outside panel 160, and a base-end panel 170.

The inside panel 140 is a substantially guitar-shaped long panel, which is folded at the center into a right side 140R and a left side 140L. The inside panel 140 has the right side 140R forming the inner surface of the right airbag section 12 and the left side 140L forming the inner surface of the left airbag section 14. The periphery of the inside panel 140 is formed of the right side 140R including a lower side 148, a front-end side 141, an upper side 142, and an upper side 143 in the vicinity of a folded portion in the deepest pocket of the airbag, and the left side 140L having an upper side 144, a front-end side 145, a lower side 146, and a lower side in the folded portion.

The periphery of the right outside panel 150 is formed of a front-end side 151, an upper side 152, a linear rear side 153, and a lower side 154. The left outside panel 160 is formed of a front-end side 161, an upper side 162, a linear rear side 163, and a lower side 164.

The base-end panel 170 has a right-side surface 170A, a bottom 170B, a left-side surface 170C, a right flap 170D forming an upper right side, and a left flap 170E forming an upper left side. The base-end panel 170 is folded to make the side surfaces 170A and 170C substantially triangular and is open to the front end of the airbag.

The periphery of the base-end panel 170 is formed of opposing sides 171 and 172 of the substantially rectangular flaps 170D and 170E, the respective front sides (flap front sides) 173 and 174 of the flaps 170D and 170E, the respective rear sides 175 and 176 of the flaps 170D and 170E, a rear side 177 facing the rear sides 175 and 176, the respective front sides (side-front sides) 178 and 179 of the side surfaces 170A and 170C, and a bottom front side 180 connecting the side-front sides 178 and 179 together.

In producing the airbag 10, the base-end panel 170 is first spread flatwise, to the side-front sides 178 and 179 of which the rear side 153 of the right outside panel 150 and the rear side 163 of the left outside panel 160 are sewn, respectively. The opposing respective sides 171 and 172 of flaps 170D and 170E of the base-end panel 170 are then stitched together. This makes the panels 150, 160, and 170 into the state in Fig. 4. Character S in Fig. 4 denotes a seam.

As Fig. 4 shows, the right outside panel 150 and the right side 140R of the inside panel 140 are opposed, wherein the front ends 141 and 151, the upper sides 142 and 152, and the lower sides 148 and 154 are stitched together, respectively. Also, the left outside panel 160 and the left side 140L of the inside panel 140 are opposed, wherein the front-end sides 145 and 161, the upper sides 144 and 162, and the lower sides 146 and 164 are stitched together, respectively. The flap front sides 173 and 174 of the base-end panel 170 are sewn on the upper side 143 in the folded portion of the inside panel 140, and the bottom front side 180 of the base-end panel 170 and the lower side 147 in the folded portion are stitched together.

The stitching makes the airbag in a state in which the airbag 10 (Fig. 1) is turned inside out, or the seam allowances are exposed to the surface of the airbag. As Fig. 4 shows, the flap rear sides 175 and 176 of the base-end panel 170 and the rear side 177 are not yet stitched together, having an opening M in this state.

The airbag is turned inside out through the opening M. The opening M is then stitched up to form the airbag 10 of Fig. 1.

As Fig. 2 shows, the bottom of the base-end panel 170 has two substantially parallel slits 54, through which an inflator 56 is passed.

The airbag 10 is mounted to a front-passenger-side airbag system for protecting a front-seat occupant of a car during a car crash.

The airbag 10 is housed in a casing (container) in a folded condition and a lid is mounted to the casing to cover the folded airbag 10, thereby forming an airbag system (not shown). The lid is torn open by the pressure from the airbag 10 when the airbag 10 inflates.

The airbag system is mounted in an airbag-system installation opening in the upper surface of an instrument panel ahead of the front passenger seat of the car.

In the airbag system, the inflator 56 is activated to emit a jet of gas in a car crash. The gas from the inflator 56 first inflates the base-end chamber 17 and then flows into the right airbag section 12 and the left airbag section 14 to inflate them.

With the airbag 10, the first inflated base-end chamber 17 comes in contact with the instrument panel to become stable in position. Therefore, the right airbag section 12 and the left airbag section 14 become stable in position not only at completion of inflation but also in the middle of inflation.

The gas is supplied from the inflated base-end chamber 17 to the right airbag section 12 and the left airbag section 14 substantially equally. Therefore, both the right airbag section 12 and the left airbag section 14 inflate smoothly and substantially bilaterally evenly from the early stage of inflation.

With the airbag 10 in a fully inflated condition, the space 13 is formed between the front ends of the right airbag section 12 and the left airbag section 14, the space 13 being opened to the occupant. The inflated right airbag section 12 receives the right chest of the occupant, the inflated left airbag section 14 receives the left chest, and the space 13 faces the vicinity of the breast bones. Therefore, the reaction force applied to the breast bones during the reception by the airbag is small.

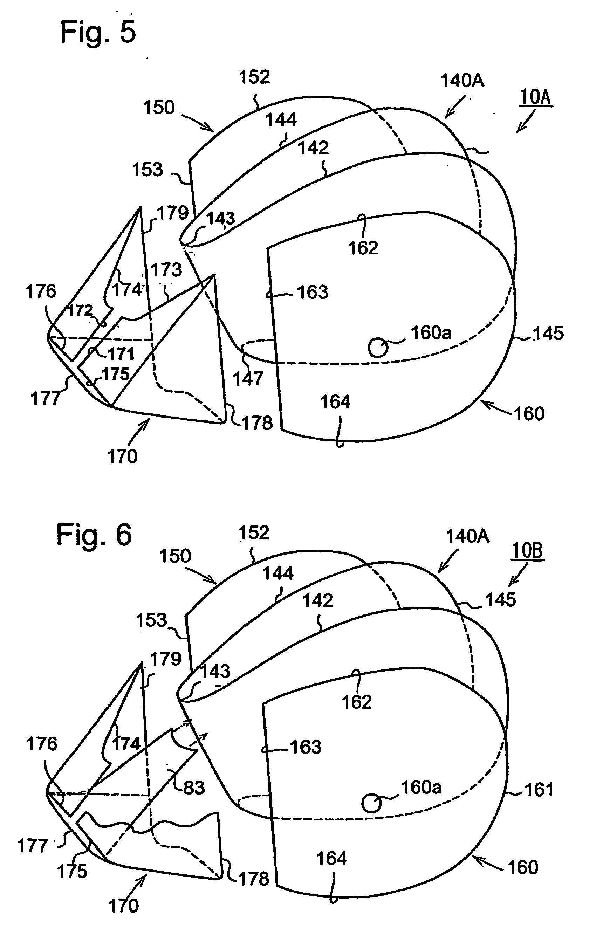

Other embodiments of the invention will be described with reference to Figs. 5 to 46.

An airbag 10A of Fig. 5 has an inside panel 140A, with the upper side 143 in the folded portion arranged closer to the base end than the lower side 147. According to the embodiment, the opposing respective sides 171 and 172 of the flaps 170D and 170E are shorter than those of the above-described embodiment, and the flap front sides 173 and 174 are cut into the base end deeper than that of the above embodiment. Other arrangements are the same as that of the above embodiment.

With an airbag 10A of Fig. 5, a higher position of the space (pocket) 13 between the right airbag section 12 and the left airbag section 14 is deeper than a lower position. The base-end chamber 17 is decreased in volume, so that the base-end chamber inflates in a short time and so the entire airbag can also inflate in a short time.

With an airbag 10B of Fig. 6, the base end of the base-end panel 170 and the vicinity of the upper side 143 in the folded portion of the inside panel 140A are joined together with a tether 83. Providing the tether 83 restricts the projection of the deepest portion of the pocket of the airbag 10B and specifies the position of the deepest portion of the pocket. This further reduces the inflating time of the airbag 10B. The airbag 10 of Figs. 1 to 4 may also include the similar tether 83.

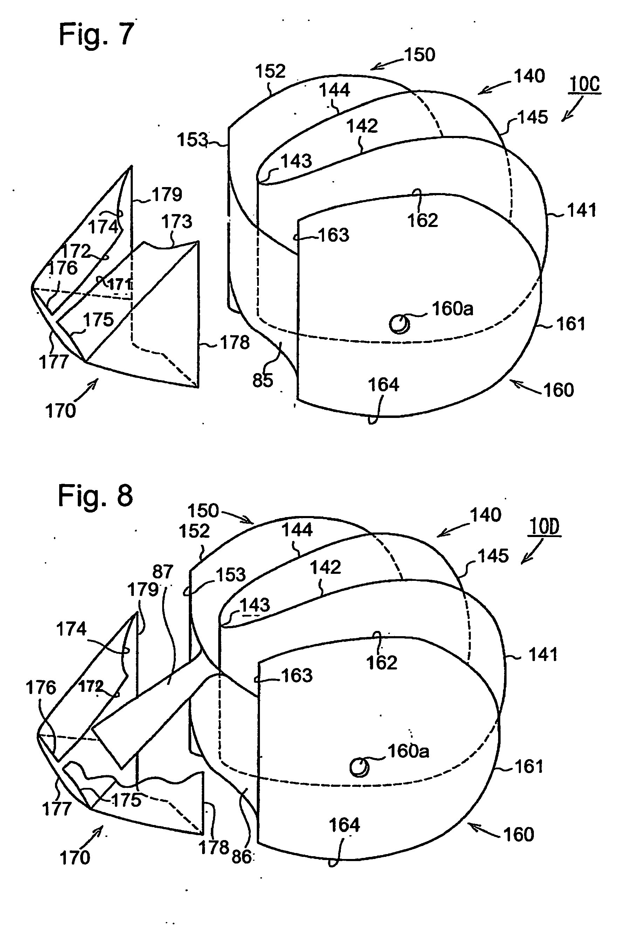

With an airbag 10C of Fig. 7, the rear side 153 of the right outside panel 150 and the rear side 163 of the left outside panel 160 are joined together with a connection panel 85. The vertical width of the connection panel 85 is smaller than the lengths of the rear sides 153 and 163, thus providing a gas-through space at the upper and lower sides of the connection panel 85, for communicating the rear chamber 17 with the right airbag section 12 and the left airbag section 14, respectively.

Providing the connection panel 85 promotes the base-end chamber 17 to inflate more quickly and makes the position of the airbag 10C more stable in the early stage of inflation.

The connection panel 85 reduces the pressure of gas applied to the folded portion of the inside panel 140. The connection panel 85 also acts to restrict the lateral width of the airbag 10C during inflation.

The connection panel 85 may be connected to the folded portion of the inside panel 140, which makes the pocket 13 of the inflated airbag 10C deep.

An airbag 10D of Fig. 8 has a tether 87 between the lateral center of a connection panel 86 and the base end of the base-end panel 170. The tether 87 may be made of a piece of cloth that is integrated with the connection panel 86. Also the connection panel 86 may be connected to the folded portion of the inside panel 140.

Providing the tether 87 allows the position of the connection panel 86 during inflation of the airbag 10D to come close to the base end of the airbag 10D.

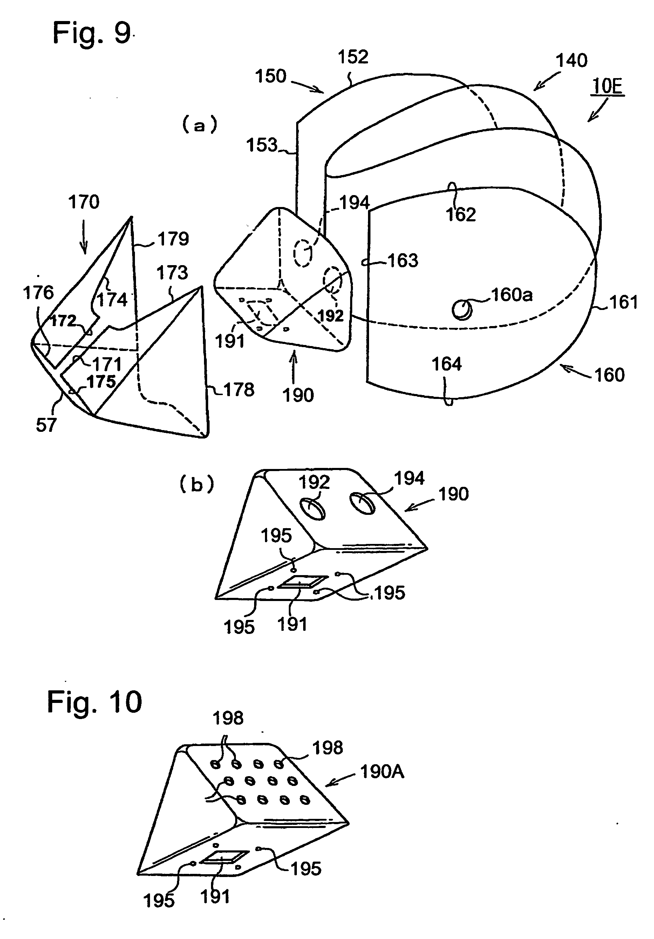

An airbag 10E of Fig. 9(a) includes a gas bag 190 in the base-end chamber 17, through which gas from an inflator is supplied into the right airbag section 12 and the left airbag section 14. The end of the gas bag 190 may be connected to the folded portion of the inside panel 140.

The gas bag 190 has a gas-inlet opening 191 in the bottom and gas-discharge openings 192 and 194 in the front end surface. The gas-discharge opening 192 faces the interior of the right airbag section 12 and the gas-discharge opening 194 faces the interior of the left airbag section 14.

Around the gas-inlet opening 191 fastener insertion holes 195 for bolts and rivets are provided to secure the gas bag 190 to the casing of the airbag system. Similar fastener insertion holes are provided also in the bottom of the base-end panel 170.

In this embodiment, the gas bag 190 has the two gas-discharge openings 192 and 194; however, the number of the openings is not limited to that. As Fig. 10 shows, a gas bag 190A having a large number of small openings 198 may be provided for discharging gas.

With the airbag 10E of Figs. 9 and 10, distribution of gas to the left and right is further equalized. With the airbag 10E of Fig. 9, the pressure of gas applied to the folded portion of the inside panel 140 can be significantly reduced.

Other arrangements of Figs. 6 to 9 are the same as that of the airbag 10 of Figs. 1 to 4.

In the embodiment of Fig. 9, the gas-discharge openings 192 and 194 may be closed with closing means such as a tear seam, wherein the closure by the tear seam and so on is released after the gas bag 190 is inflated until the pressure of gas in the gas bag 190 reaches a predetermined level to supply the gas into the right airbag section 12 and left airbag section 14.

According to the invention, the inside panel may be formed of two panels or more joined together by stitching or the like. For example, the inside panel may be formed of two panels of the same shape as that of the outside panel and a panel connecting them, three panels in total.

The panels may be made by other ways.

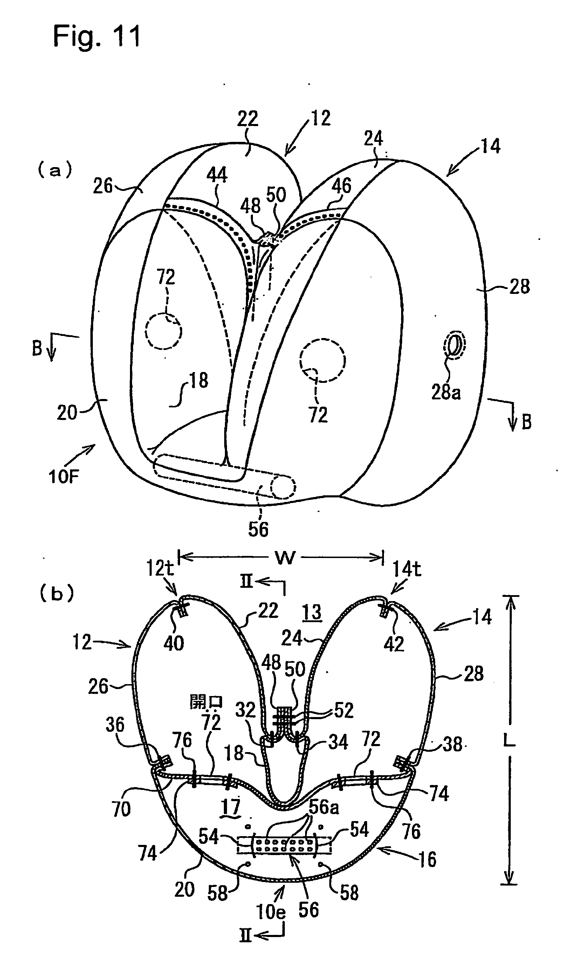

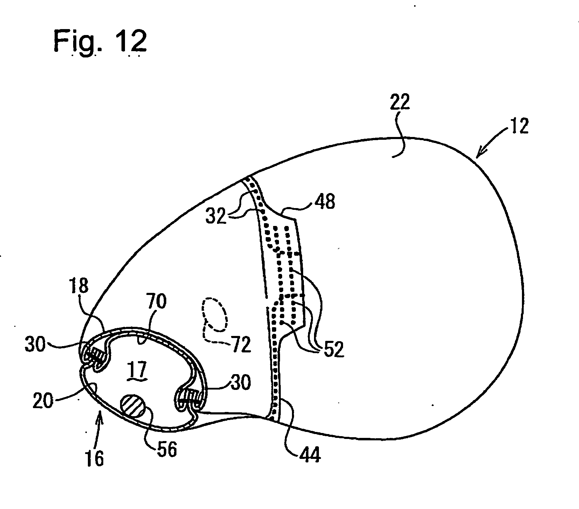

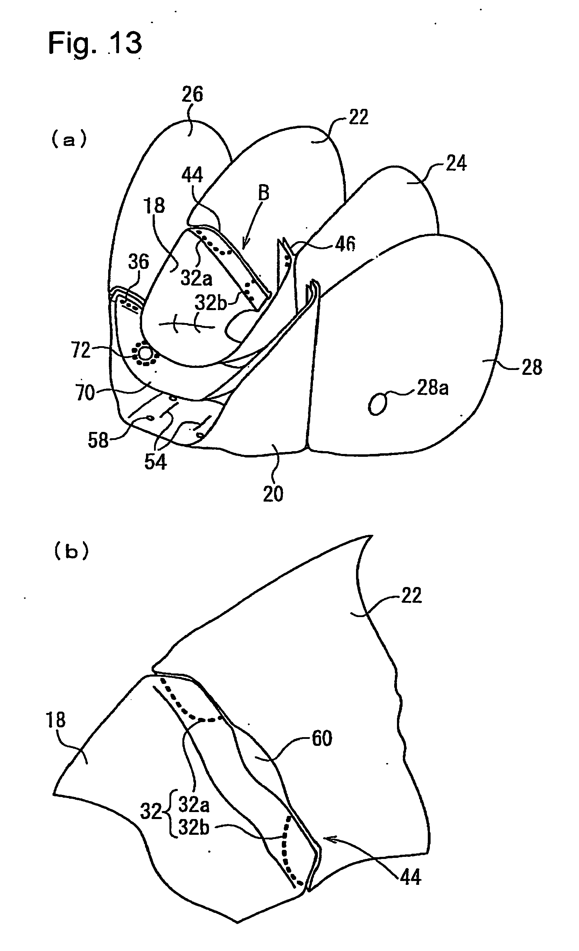

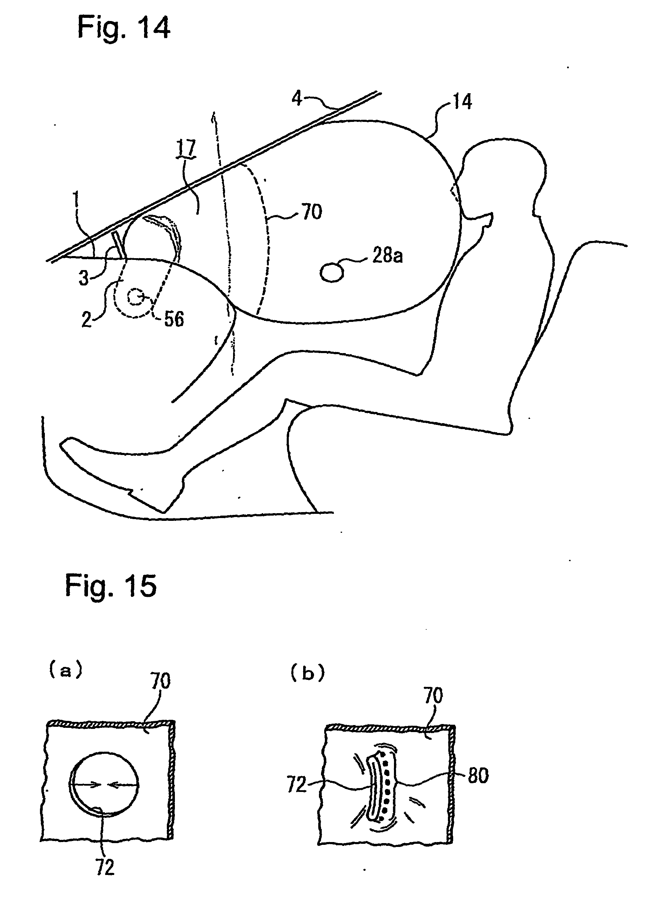

Fig. 11(a) is a perspective view of an airbag 10F in an inflated state, according to another embodiment of the invention; Fig. 11(b) is a sectional view of the airbag of Fig. 11(a), taken along line B-B; Fig. 12 is a sectional view of the airbag of Fig. 11(b), taken along line II-II; Fig. 13(a) is an exploded perspective view of the airbag; Fig. 13(b) is an enlarged diagram of part B of Fig. 13(a); and Fig. 14 is a diagram (side view) of the airbag, showing an inflated state in a vehicle chamber.

The airbag 10F includes a right airbag section 12 to be inflated right forward of an occupant, a left airbag section 14 to be inflated left forward of the occupant, and a communicating section 16 for communicating one end of the right airbag section 12 and one end of the left airbag section 14 with each other. The communicating section 16 is the base end of the airbag 10F. Therefore, the right airbag section 12 and the left airbag section 14 inflate in the direction away from the connecting section 16.

The airbag 10F has therein a partition panel 70 for partitioning each of the right airbag section 12 and the left airbag section 14 into a base end (adjacent to the communicating section 16) and a front end. The partition panel 70 has two openings 72 for communicating the base end and the front end of the right airbag section 12 and the base end and the front end of the left airbag section 14, respectively. In accordance with the embodiment, the right airbag section 12 and the left airbag section 14 have a substantially equal volume, and the opening 72 communicating the base end of the right airbag section 12 with the front end and the opening 72 communicating the base end of the left airbag section 14 with the front end have a substantially equal opening area.

The partition panel 70 partitions the airbag 10F to make a base-end chamber 17 consisting of the respective base ends of the right airbag section 12 and the left airbag section 14 and the communicating section 16.

According to the embodiment, as Fig. 4 shows, the base-end chamber 17 inflates toward the occupant along the upper surface of an instrument panel 1, and the lower part at the front end of the base-end chamber 17 in the direction of inflation further expands from the end of the upper surface of the instrument panel 1 (the end adjacent to the occupant) toward the occupant. With such an arrangement, the lower surface of the inflated base-end chamber 17 is brought into even contact with the upper surface of the instrument panel 1 to make the position of the base-end chamber 17 significantly stable during inflation.

The length of the projection of the lower part at the front end of the base-end chamber 17 in an inflated condition from the end of the instrument panel 1 is preferably 150 mm or less.

During the inflation of the airbag 10F, the front ends of the right airbag section 12 and the left airbag section 14 have no bridge member such as a tie panel therebetween; a space 13 between the front ends of the airbag sections 12 and 14 is opened to the occupant (upward in Fig. 11(b)).

In a state in which the airbag 10F has fully inflated, the space W between the forefront end 12t of the right airbag section 12 and the forefront end 14t of the left airbag section 14 is preferably 150 mm to 350 mm, more preferably, 170 mm to 330 mm.

With the airbag 10F, the intermediate portion in the direction of inflation of the right airbag section 12 and the intermediate portion in the direction of inflation of the left airbag section 14 are joined together with a seam 52.

According to the embodiment, the airbag 10F is formed by stitching panels 18, 20, 22, 24, 26, 28, and 70 together. The structure of stitching the panels will be specifically described hereinafter.

As Fig. 13(a) shows, the panel 18 (rear inner panel forms a surface at the center of the airbag 10F between the part of the right airbag section 12 and the left airbag section 14 closer to the rear end than the intermediate portion in the direction of inflation (adjacent to the base end) and the communicating section 16. The panel 20 (rear outer panel) forms a surface opposite to the rear inner panel 18 (outer surface of the airbag 10F).

The panels 22 and 24 (front inner panels) form surfaces at the center of the airbag 10F closer to the front end than the intermediate portion in the direction of inflation of the right airbag section 12 and the left airbag section 14 (surfaces opposed to the right airbag section 12 and the left airbag section 14).

The panels 26 and 28 (front outer panels) form surfaces opposite to the front inner panels 22 and 24 (outer surfaces of the airbag 10F), respectively.

Numeral 30 denotes a seam that stitches the rear inner panel 18 and the rear outer panel 20 together; numerals 32 and 34 indicate seams that stitch the rear inner panel 18 and the front inner panels 22 and 24 together, respectively; and numeral 36 and 38 represent seams that stitch the rear outer panel 20 and the front outer panels 26 and 28 together, respectively.

The panel 70 (partition panel) partitions the right airbag section 12 and the left airbag section 14 into the respective base ends and front ends, as described above. With this embodiment, the partition panel 70 has substantially the same shape as that of the rear outer panel 20. In making the airbag 10F, the partition panel 70 is superposed on the inner surface of the rear outer panel 20 (a surface facing the interior of the airbag product), the periphery of which is stitched to all around the rear outer panel 20 with the seams 30, 36 and 38.

The space between the partition panel 70 and the rear outer panel 20 is the base-end chamber 17.

With the base-end chamber 17 in an inflated condition, as Figs. 11(b) and 12 show, the partition panel 70 is in close contact with the inner surface of the rear inner panel 18 in the crotch between the right airbag section 12 and the left airbag section 14. This prevents mutual movement of gas between the right airbag section 12 and the left airbag section 14.

The embodiment has a reinforcing patch 74 adhered to the periphery of each opening 72 of the partition panel 70. Numeral 76 indicates a seam for stitching the patch 74 on the periphery of each opening 72.

Numeral 28a denotes a left airbag section vent hole provided in the front outer panel 28. The front outer panel 26 also has a similar right airbag section vent hole (not shown).

As Fig. 11(a) shows, respective seam allowances 44 and 46 for the rear inner panel 18 and the front inner panels 22 and 24 are arranged to be exposed from the outer surfaces of the right airbag section 12 and the left airbag section 14 of the airbag product. As Figs. 11 and 12 show, tongue-shaped connecting allowances 48 and 50 (only the connecting allowance 48 is shown in Fig. 12) project from the seam allowances 44 and 46. As Fig. 11, particularly Fig. 11(b), clearly shows, the connecting allowances 48 and 50 are stitched together with a seam 52.

In this way, the right airbag section 12 and the left airbag section 14 are connected together such that the intermediate portions of the opposed parts in the direction of inflation are joined to each other through the respective seam allowances 44 and 46 of the rear inner panel 18 and the front inner panels 22 and 24.

The distance from the rear end 10e of the inflated airbag 10F to the seam 52 is preferably on the order of 30 percent to 70 percent of the longitudinal length L of the inflated airbag 10F, particularly, about 40 percent to 55 percent.

The rear outer panel 20 facing the base-end chamber 17 has a pair of slits 54 for inserting an inflator. As Figs. 11(a) and 11(b) show, the embodiment includes a rod-shaped inflator 56. The rod-shaped inflator 56 is inserted in the slits 54 to pass through the communicating section 16 along the width of the vehicle. Opposite ends of the inflator 56 are arranged outside the airbag 10F. As Fig. 11(b) shows, gas ports 56a of the inflator 56 are disposed in the base-end chamber 17.

The airbag 10F is mounted to a front-passenger-side airbag system for protecting a front-seat occupant of a car during a car crash. As Fig. 14 shows, the airbag system includes an open-top box-shaped casing 2 for housing the airbag 10F. The airbag 10F is connected to the casing 2. Numeral 58 of Fig. 11(b) indicates a hole for inserting a fastener (not shown) such as a bolt for connecting the airbag 10F with the casing 2. The opposite ends of the inflator 56 are also fixed in the casing 2.

The airbag 10F is housed in the casing 2 in a folded condition and a lid 3 is mounted to the casing 2 to cover the folded airbag 10F, thereby forming an airbag system. The lid 3 is torn open by the pressure from the airbag 10F when the airbag 10F inflates.

The airbag system is mounted in an airbag-system installation opening on the upper surface of the instrument panel 1 ahead of the front passenger seat of the car. Numeral 4 denotes a windshield. In this embodiment, the lid 3 extends substantially flush with the upper surface of the instrument panel 1 and closes the airbag-system installation opening.

In the airbag system, the inflator 56 is activated to emit a jet of gas into the base-end chamber 17 in a car crash. The gas from the inflator 56 first inflates the base-end chamber 17 and then flows into the respective front-end chambers of the right airbag section 12 and the left airbag section 14 through the openings 72 of the partition panel 70 to inflate the respective front ends of the right airbag section 12 and the left airbag section 14 on the right and left sides ahead of the occupant.

With the airbag 10F, the first inflated base-end chamber 17 comes in contact with the instrument panel 1 to become stable in position. Therefore, the respective front ends of the right airbag section 12 and the left airbag section 14 become stable in position not only at completion of inflation but also in the middle of inflation.

In the embodiment, the base-end chamber 17 inflates along the upper surface of the instrument panel 1, and in the inflated state, the lower part at the front end of the base-end chamber 17 in the direction of inflation further projects from the end of the upper surface of the instrument panel 1 toward the occupant, so that the lower surface of the inflated base-end chamber 17 comes into even contact with the upper surface of the instrument panel 1 to make the base-end chamber 17 stable in position during inflation.

With the airbag 10F, when the right airbag section 12 and the left airbag section 14 inflate from the housed folded condition, and even when one of the right airbag section 12 and the left airbag section 14 inflates first and the other one inflates later, the first inflated airbag pulls the other delayed airbag to promote its inflation since the right airbag section 12 and the left airbag section 14 are connected together.

Moreover, the intermediate portions in the direction of inflation of the right airbag section 12 and the left airbag section 14 are joined together with the seam 52, so that the first inflated airbag starts to pull the other delayed airbag in the direction of inflation in a relatively early stage after the start of inflation. Therefore, both the right airbag section 12 and the left airbag section 14 inflate smoothly and substantially bilaterally evenly from the early stage of inflation.

With the airbag 10F in a fully inflated condition, the space 13 is formed between the right airbag section 12 and the left airbag section 14, which is opened to the occupant. The inflated right airbag section 12 receives the right thorax of the occupant, the inflated left airbag section 14 receives the left thorax, and the space 13 faces the vicinity of the breast bones. Therefore, the reaction force applied to the breast bones during the reception by the airbag is small.

The airbag 10F is produced by the following procedure.

Referring to Fig. 13(a), the partition panel 70 is first superposed on the rear outer panel 20; and the superposed panels and the front outer panels 26 and 28 are then stitched together with the seams 36 and 38. At that time, the rims of the rear outer panel 20, the partition panel 70, and the front outer panel 26 are stitched together, and the rims of the rear outer panel 20, the partition panel 70, and the front outer panel 28 are stitched together in three layers with the seams 36 and 38, respectively.

The rear inner panel 18 and the front inner panels 22 and 24 are stitched together with the seams 32 and 34, respectively. The seam allowances 44 and 46 of the rear inner panel 18 and the front inner panels 22 and 24 are arranged on the side exposed to the exterior of the airbag product.

In this embodiment, as Fig. 13(b) shows, only opposite ends of the seam allowance 44 of the rear inner panel 18 and the transparent member 22 are stitched together with the seam 32 (32a and 32b), respectively, and between the seams 32a and 32b is formed an opening 60 for reversing the airbag.

The stitched body of the rear inner panel 18, the partition panel 70, and the front inner panels 22 and 24 are superposed on the stitched body of the rear outer panel 20 and the front outer panels 26 and 28 such that the surfaces exposed to the exterior of the airbag product are opposed, and they are then stitched together to surround the periphery thereof with seams 30, 40, and 42. The peripheries in which the rear inner panel 18, the partition panel 70, and the rear outer panel 20 overlap are stitched together in three layers with the seam 30. In this way, a reversed airbag intermediate product is produced.

The airbag intermediate product is turned inside out through the opening 60 in the seam allowance 44. The respective connecting allowances 48 and the 50 of the seam allowances 44 and 46 are stitched together with the seam 52 to finish the product of the airbag 10F.

When stitching the connecting allowances 48 and 50 together, the opening 60 is closed with the seam 52.

The airbag 10F is made up of a plurality of panels as described above, so that the outer surface of the airbag 10F having a large area and a complicated shape can be produced effectively with panels of relatively small-areas.

In this embodiment, the right airbag section 12 and the left airbag section 14 are joined together such that the respective seam allowances 44 and 46 of the rear inner panel 18 and the front inner panels 22 and 24 are stitched together, so that there is no need to use a tie panel for connecting the right airbag section 12 and the left airbag section 14 in addition to the panels 18, 22, and 24, thereby reducing the production cost of the airbag 10F.

In this embodiment, the inflator 56 is arranged in the communicating section 16 such that the rear outer panel 20 of the communicating section 16 has a pair of slits 54 as inflator openings, into which the rod-shaped inflator 56 is inserted. With the slit-shaped inflator opening, the inflator 56 is firmly connected to the airbag 10F.

In this embodiment, the seam allowance 44 is provided with the opening 60 for reversing the airbag product in the process of producing the airbag, as described above. Accordingly, even if the airbag intermediate product is difficult to turn inside out through the vent hole or the inflator opening, and particularly, even when the inflator opening is shaped like a slit as in the embodiment, the airbag intermediate product can be easily turned inside out through the opening 60.

Since the opening 60 is closed by the seam 52 when the connecting allowances 48 and 50 are stitched together, the gas guided from the inflator 56 to the right airbag section 12 and the left airbag section 14 does not leak from the opening 60.

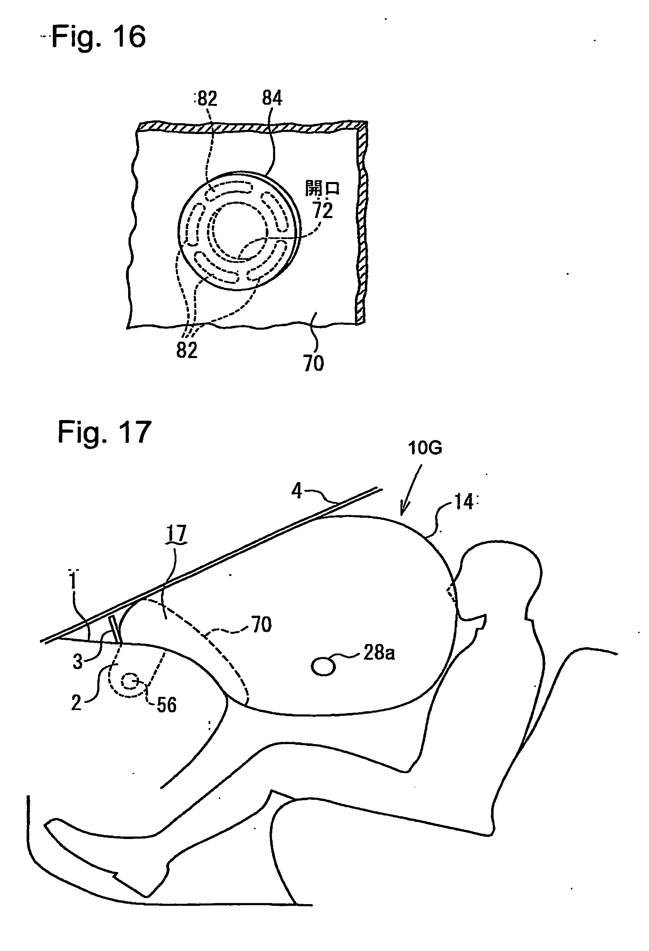

In accordance with the invention, the openings 72 that communicate the base-end chamber 17 with the respective front ends of the right airbag section 12 and the left airbag section 14 may be closed until the inner pressure in the base-end chamber 17 reaches a predetermined level. Figs. 15 and 16 show the opening 72 of the partition panel 70 to be closed in perspective view, according to an embodiment as described above. Fig. 15(a) shows the opening 72 in an open state and Figs. 15(b) and 16 show the opening 72 in a closed state.

Referring to Fig. 15, the radially opposing peripheries of the opening 72 of the partition panel 70 are superposed on each other and stitched together with a tear seam 80 to close the opening 72. The tear seam 80 is torn by the tension to separate the peripheries of the opening 72 to open the opening 72 when the inner pressure in the base-end chamber 17 has reached a predetermined level.

Referring to Fig. 16, a patch 84 is bonded to the partition panel 70 with a removable adhesive 82 so as to be superposed on the opening 72, thereby closing the opening 72. The patch 84 is disposed in the respective front-end chambers of the right airbag section 12 and the left airbag section 14. The adhesive 82 allows the patch 84 to peel off from the surface of the partition panel 70 by the pressure applied to the patch 84 from the base-end chamber 17 through the opening 72 when the inner pressure in the base-end chamber 17 has reached a predetermined level.

As shown in Figs. 15 and 16, the openings 72 that communicate the base-end chamber 17 with the respective front ends of the right airbag section 12 and the left airbag section 14 are closed until the inner pressure in the base-end chamber 17 reaches a predetermined level, so that the base-end chamber 17 can be inflated early.

In the embodiment of Fig. 15, the peripheries of the opening 72 may be bonded together with a removable adhesive similar to the adhesive 82 instead of the tear seam 80, or alternatively, with other bonding means.

In the embodiment of Fig. 16, the patch 84 may be sewn on the partition panel 70 with a tear seam instead of the adhesive 82, or alternatively, with other bonding means. Although the adhesive 82 is applied to the periphery of the opening 72 in broken line in Fig. 16, the adhesive 82 may be applied in any other ways.

In the case of airbag 10F, as Fig. 14 clearly shows, the upper part and the lower part of the partition panel 70 are arranged substantially equally apart from the base end of the right airbag section 12 or the left airbag section 14 in the front end in the direction of inflation of the base-end chamber 17. However, as Fig. 17 shows, the lower part of the partition panel 70 may be arranged more apart from the base end than the upper part. With such an arrangement, even if the volume of the base end is small, the contact area of the base-end chamber 17 with the instrument panel 1 can be made large and thus the position of the inflated base-end chamber 17 can be made stable.

Fig. 17 is a side view of an airbag 10G with such an arrangement, showing a state similar to that of Fig. 14. The airbag 10G is similar to the airbag 10F of Figs. 11 to 14 except that the lower part of the partition panel 70 is apart from the base end of the right airbag section 12 or the left airbag section 14 more than the upper end thereof. In Fig. 14, the numerals same as those of Figs. 11 to 14 denote the same components.

Also with the airbag 10G, the base-end chamber 17 inflates along the upper surface of the instrument panel 1 toward the occupant, and in the inflated state, the lower part of the front end in the direction of inflation of the base-end chamber 17 (the lower part of the partition panel 70) further projects from the end of the upper surface of the instrument panel 1 toward the occupant. With such an arrangement, the lower surface of the inflated base-end chamber 17 is brought into even contact with the upper surface of the instrument panel 1 to make the base-end chamber 17 significantly stable in position during inflation.

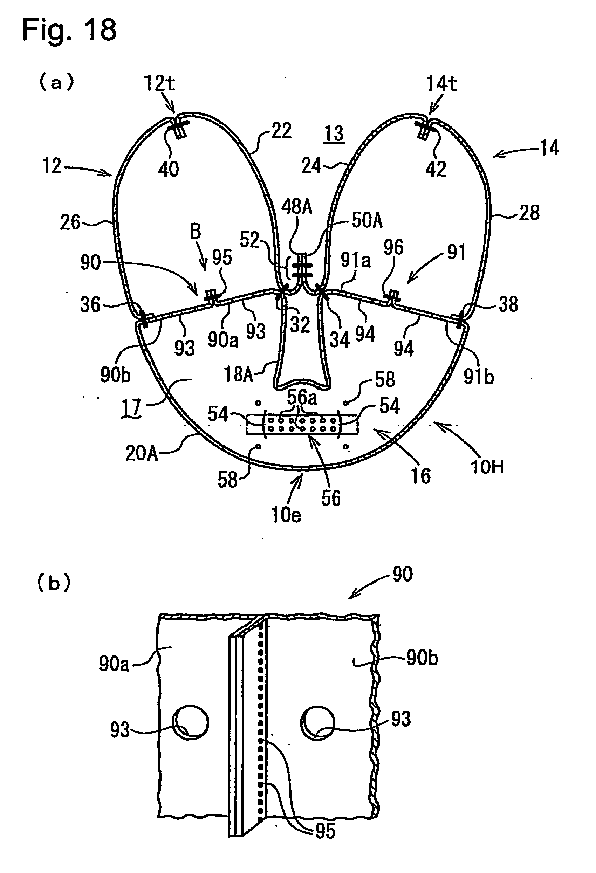

With the above embodiments, a partition panel is provided, separately from the panels forming the outer shell of the airbag, to partition each of the left airbag section and the right airbag section into the base end and the front end. However, as Fig. 18 shows, the panels forming the outer shell of the airbag and the partition panel may be integrated to one. Fig. 18 is a sectional view of an airbag 10H with such an arrangement, showing a part similar to Fig. 11(b); and Fig. 18(b) is an enlarged perspective view of part B of Fig. 18(a).

Also the airbag 10H of Fig. 18 includes the right airbag section 12 to be inflated right forward of the occupant, the left airbag section 14 to be inflated left forward of the occupant, and the communicating section 16 for communicating the base ends of the right airbag section 12 and the left airbag section 14 with each other. In this embodiment, the interior of the right airbag section 12 is partitioned into the base end and the front end by a partition panel 90 and the interior of the left airbag section 14 is partitioned into the base end and the front end by a partition panel 91.

The partition panel 90 has openings 93 for communicating the base end of the right airbag section 12 with the front end. The partition panel 91 has openings 94 for communicating the base end of the left airbag section 14 with the front end.

Also the airbag 10H has an outer shell formed by stitching a rear inner panel 18A forming the central surface of the airbag 10H, between the respective base ends of the right airbag section 12 and the left airbag section 14 and the communicating section 16, a rear outer panel 20A forming a surface opposed to the rear inner panel 18A, the front inner panels 22 and 24 forming the central surfaces of the airbag 10H at the respective front ends of the right airbag section 12 and the left airbag section 14, and the front outer panels 26 and 28 forming surfaces opposite to the front inner panels 22 and 24 together.

Numerals 32 and 34 indicate seams that stitch the rear inner panel 18A and the front inner panels 22 and 24 together, respectively. Numerals 36 and 38 denote seams that stitch the rear outer panel 20A and the front outer panels 26 and 28 together, respectively.

According to the embodiment, half panels 90a and 91a project from opposite ends of the rear inner panel 18A sewn to the front inner panels 22 and 24 with the seams 32 and 34, respectively. Also from opposite ends of the rear outer panel 20A sewn to the front outer panels 26 and 28 with the seams 36 and 38, half panels 90b and 91b project, respectively. The half panels 90a and 91a are integrated with the rear inner panel 18A and the half panels 90b and 91b are integrated with the rear outer panel 20A.

The half panels 90a and 91a are disposed in the right airbag section 12 and the half panels 90b and 91b are disposed in the left airbag section 14. The openings 93 are provided to both of the half panels 90a and 90b and the openings 94 are provided to both of the half panels 91a and 91b.

As Fig. 18(a) shows, the ends of the half panels 90a and 90b are stitched together to form the partition panel 90 and to partition the interior of the right airbag section 12 into the base end and the front end. Similarly, the ends of the half panels 91a and 91b are stitched together to form the partition panel 91 and to partition the interior of the left airbag section 14 into the base end and the front end.

The airbag 10H is partitioned by the partition panels 90 and 91 into the respective base ends of the right airbag section 12 and the left airbag section 14 and the base-end chamber 17 formed of the communicating section 16.

In this embodiment, connecting allowances 48A and 50A project from the respective ends of the front inner panels 22 and 24 that are sewn to the rear inner panel 18A with the seams 32 and 34, respectively. As Fig. 18(a) shows, the connecting allowances 48A and 50A are arranged on the exterior of the airbag 10H, which are stitched together with the seam 52 to join the intermediate portions in the direction of inflation of the right airbag section 12 and the left airbag section 14.

Other arrangements of the airbag 10H are the same as those of the airbag 10F of Figs. 11 to 14.

With the airbag 10H, the partition panels 90 and 91 for dividing the respective base ends and the front ends of the right airbag section 12 and the left airbag section 14 from each other are integrated with the panels 18A and 20A that form the outer shell of the airbag 10H. This eliminates the necessity for an additional material for the partition panel, thus decreasing the cost of producing the airbag.

Also with the airbag 10H, when the inflator 56 is activated, the base-end chamber 17 first inflates and thereafter the front ends of the right airbag section 12 and the left airbag section 14 inflate. The first inflated base-end chamber 17 comes in contact with the instrument panel 1, thus becoming stable in position. Therefore, the respective front ends of the right airbag section 12 and the left airbag section 14 become stable in position not only at the completion of inflation but also in the middle of inflation.

Also with the airbag 10H, the intermediate portions in the direction of inflation of the right airbag section 12 and the left airbag section 14 are joined together. Therefore, when the right airbag section 12 and the left airbag section 14 inflate from the housed folded state, even when one of the right airbag section 12 and the left airbag section 14 first inflates and the other inflates later, the first inflated airbag starts to pull the other delayed airbag in the direction of inflation in a relatively early stage after the start of inflation. Therefore, both the right airbag section 12 and the left airbag section 14 inflate smoothly and substantially bilaterally evenly from the early stage of inflation.

Although this embodiment has the partition panels 90 and 91 integrated with the rear inner panel 18A and the rear outer panel 20A, they may be integrated with the other panels. The embodiment has the partition panels 90 and 91 formed of two half panels 90a and 90b or 91a and 91b; however, it may have one-piece panel.

Although the embodiment has the openings 93 in both of the half panels 90a and 90b consisting the partition panel 90, as Fig. 18(b) shows, it may have the openings 93 in only one of them. As Figs. 15 and 16 show, the openings 93 may be closed with a tear seam or a patch to prevent gas from being discharged from the base-end chamber 17 until the inner pressure in the base-end chamber 17 reaches a predetermined level during the inflation of the airbag. With such an arrangement, also the airbag 10H is allowed to inflate the base-end chamber 17 early.

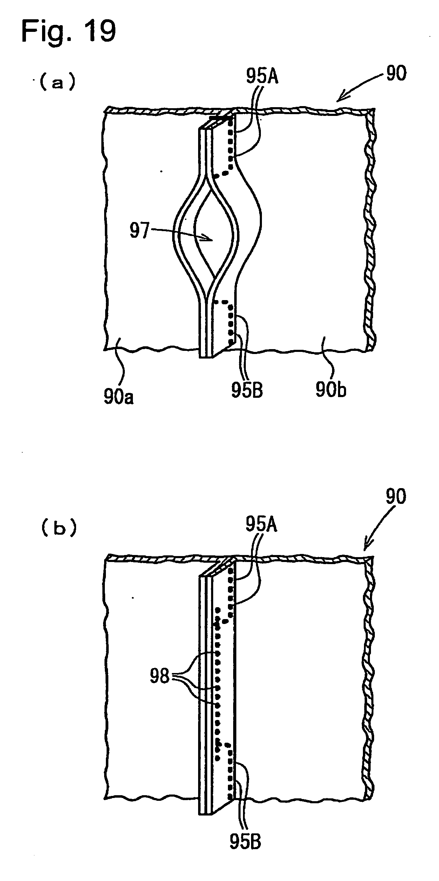

In place of the openings 93, as Fig. 19(a) shows, it is possible to stitch the ends of the half panels 90a and 90b together with noncontiguous seams 95A and 95B, thereby forming an opening 97 between the seams 95A and 95B. This omits the trouble of making openings in the half panels 90a and 90b.

Also with such an arrangement, as Fig. 19(b) shows, the portion between the seams 95A and 95B may be stitched together with a tear seam 98 to close the opening 97 until the inner pressure in the base-end chamber 17 reaches a predetermined level during the inflation of the airbag. The opening 97 may be closed by a removable adhesive such as the adhesive 82 or other various bonding means in place of the tear seam 98.

Fig. 19 is a perspective view of a part similar to that of Fig. 18(b), showing another opened state thereof; Fig. 19(a) shows the opening in an open state; and Fig. 19(b) shows the opening in a closed state.

It is obvious that the arrangement of the partition panel 90 can be applied to the partition panel 91.

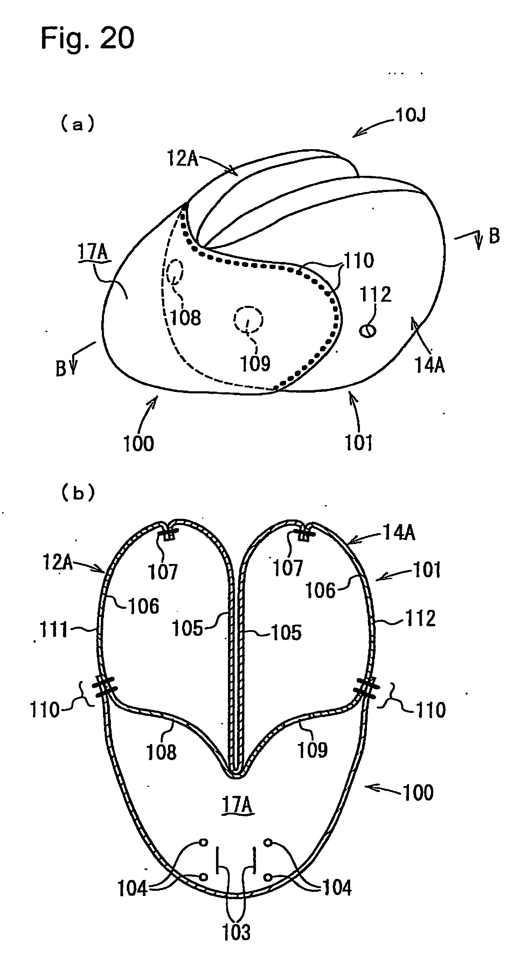

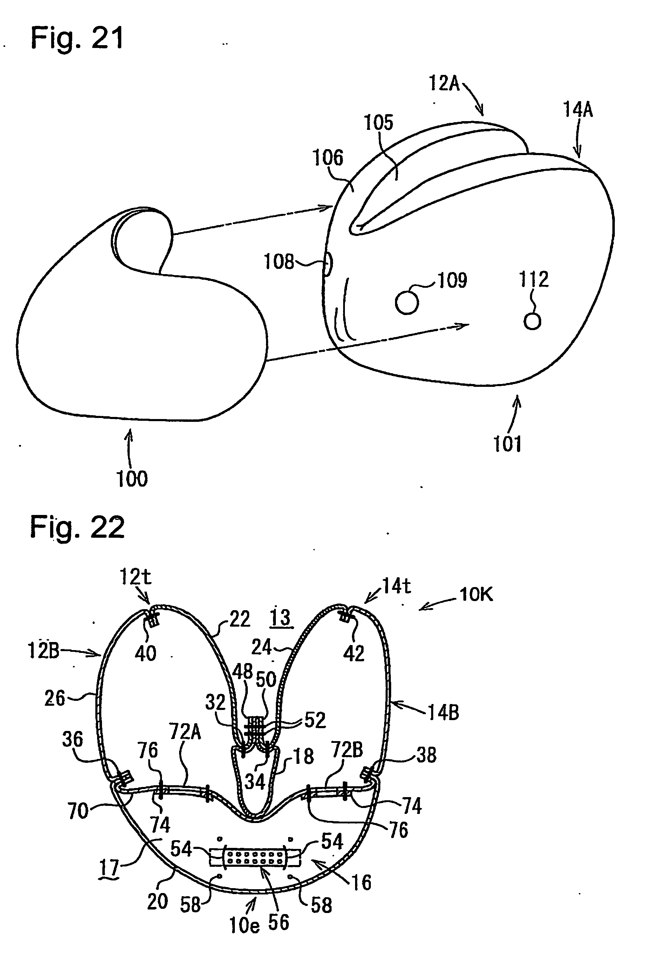

In the above embodiments, the respective base ends and front ends of the left airbag section and the right airbag section are integrated and partition panels are provided in the left airbag section and the right airbag section to partition each of them into the base end and the front end. Like an airbag 10J of Figs. 20 and 21, the respective base ends and front ends of the left airbag section and the right airbag section may be separately formed in advance and then joined to each other.

Figs. 20(a) is a perspective view of the airbag 10J with such an arrangement; Fig. 20(b) is a sectional view of the airbag 10J of Fig. 20(a), taken along line B-B; and Fig. 21 is an exploded perspective view of the airbag 10J.

Also the airbag 10J includes a right airbag section 12A to be inflated right forward of the occupant and a left airbag section 14A to be inflated left forward of the occupant, which communicate on the respective base ends.

The airbag 10J is formed by joining a rear-side airbag 100 that forms the base ends of the right airbag section 12A and the left airbag section 14A with a front-side airbag 101 that forms the respective front ends of the right airbag section 12A and the left airbag section 14A. The rear-side airbag 100 and the front-side airbag 101 are separately made in advance when the airbag 10J is produced.

The rear-side airbag 100 is shaped like a substantially circular-truncated-cone-shaped bag that is opened on the major diameter end (near the front end). The internal space in the rear-side airbag 100 is a base-end chamber 17A. The rear-side airbag 100 has a pair of slits 103 in the lower surface of the base end of the rear-side airbag 100. Into the slits 103, a rod-like inflator (not shown) is inserted to pass through the base-end chamber 17A along the width of the vehicle. Numeral 104 indicates a hole for inserting a fastener (not shown) such as a bolt for connecting the rear end of the rear-side airbag 100 with the casing (not shown) of the airbag system.

The front-side airbag 101 is formed in bag form by superposing an inner panel 105 that forms the central surface of the airbag at the respective front ends of the right airbag section 12A and the left airbag section 14A on an outer panel 106 opposite to the inner panel 105 and stitching the peripheries thereof together. Numeral 107 represents a seam that stitches the inner panel 105 and the outer panel 106 together. Between the inner panel 105 and the outer panel 106, the respective front-end chambers of the right airbag section 12A and the left airbag section 14A are formed in connection with each other.

The front-side airbag 101 is folded in two at the intermediate portion of the length. The folded portion forms the base end of the respective front-end chambers of the right airbag section 12A and the left airbag section 14A.

The outer panel 106 has a pair of openings 108 and 109 arranged on both sides of the folded portion. One opening 108 faces the front-end chamber of the right airbag section 12A and the other opening 109 faces the front-end chamber of the left airbag section 14A.

The base end (folded portion) of the front-side airbag 101 is fitted in the end opening of the rear-side airbag 100 so that the openings 108 and 109 face the base-end chamber 17A. The periphery of the end opening is sewn to the outer surface of the outer panel 106 of the front-side airbag 101. The base-end chamber 17A communicates with the front end of the right airbag section 12A and the front end of the left airbag section 14A through the openings 108 and 109, respectively.

In other words, with the airbag 10J, the outer panel 106 acts as a partitioning mean for dividing the respective base ends of the right airbag section 12A and the left airbag section 14A from the front ends.

The outer panel 106 has vent holes 111 and 112 for discharging gas in the respective front-end chambers of the right airbag section 12A and the left airbag section 14A to the exterior.

Also with the airbag 10J, an inflator is disposed in the base-end chamber 17A through the slits 103. When the inflator is activated to emit a jet of gas, the gas from the inflator first inflates the base-end chamber 17A and then flows into the respective front-end chambers of the right airbag section 12A and the left airbag section 14A through the openings 108 and 109 to inflate them, respectively. The first inflated base-end chamber 17A comes into contact with the component of the vehicle such as an instrument panel, thus becoming stable in position. Therefore, the front ends of the right airbag section 12A and the left airbag section 14A are stable in position not only after the completion of inflation but also in the middle of inflation.

Although the above embodiments have the left airbag section and the right airbag section with a substantially equal volume, the left airbag section and the right airbag section may have different volumes. When the left airbag section and the right airbag section have different volumes, the areas of the openings for communicating the respective base ends of the left airbag section and the right airbag section with the front ends are set such that the opening for the larger-volume bag is larger. With such an arrangement, the left airbag section and the right airbag section having different volumes can be inflated at substantially the same time.

Fig. 22 is a sectional view of an airbag 10K with such an arrangement, showing parts similar to that of Fig. 11(b).

With the airbag 10K of Fig. 22, the volume of a right airbag section 12B is larger than that of a left airbag section 14B. The area of an opening 72A that communicates the front end of the right airbag section 12B with the base-end chamber 17 is also larger than that of an opening 72B that communicates the front end of the left airbag section 14B with the base-end chamber 17.

Other arrangements of the airbag 10K are the same as those of the airbag 10F of Figs. 11 to 14.

With the airbag 10K, when the inflator 56 is activated to inflate the base-end chamber 17 with gas from the inflator 56 and then the gas in the base-end chamber 17 flows into the right airbag section 12B and the left airbag section 14B through the openings 72A and 72b, respectively, the amount of gas passing through the opening 72A is larger than that of gas passing through the opening 72B. Accordingly, the left airbag section 14B and the right airbag section 12B whose volume is larger than that of the left airbag section 14B inflate substantially at the same time.

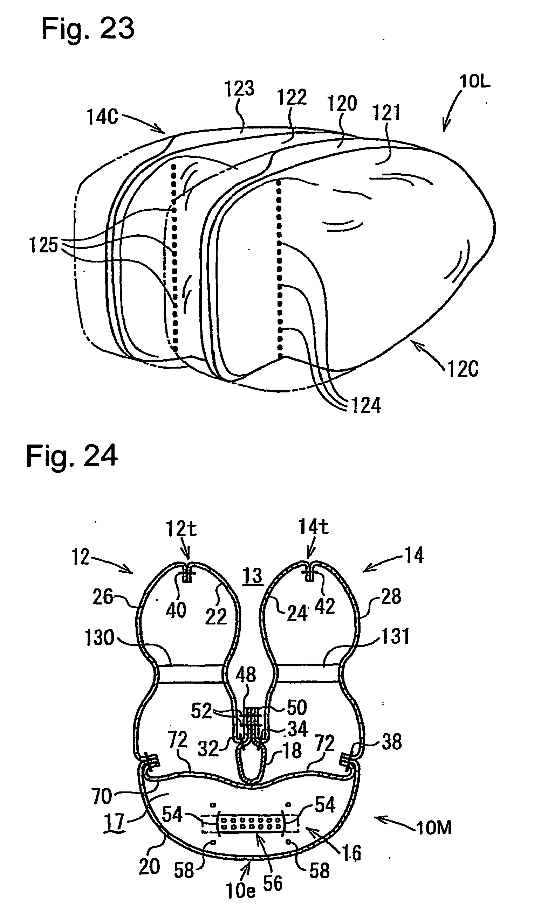

Referring to Fig. 23, a further embodiment of the invention will be described.

Fig. 23 is a perspective view of an airbag 10L. Also the airbag 10L includes a right airbag section 12C to be inflated right forward of the occupant and a left airbag section 14C to be inflated left forward of the occupant, which communicate with each other at the respective base ends. An inflator (not shown) is disposed in the communicating part of the base ends. The left and right sides of the right airbag section 12C are formed of an inner panel 120 and an outer panel 121. The left and right sides of the left airbag section 14C are also formed of an inner panel 122 and an outer panel 123.

With this embodiment, the right airbag section 12C and the left airbag section 14C are partitioned into the base end and the front end by stitching the panels 120 and 121 and the panels 122 and 123 together with tear seams 124 and 125, respectively, in the middle between the respective base ends and the respective front ends (in the intermediate portions in the direction of inflation).

The tear seams 124 and 125 extend from the upper ends of the right airbag section 12C and the left airbag section 14C to the lower ends, respectively. The respective stitched parts of the panels 120 and 121 and the panels 122 and 123 with the seams 124 and 125 block the circulation of gas between the respective base ends of the right airbag section 12C and the left airbag section 14C and the front ends.

The tear seams 124 and 125 are torn open by a tension to separate the panel 121 from the panel 122 and the panel 122 from the panel 123 when the inner pressure in the base-end chambers of the right airbag section 12C and the left airbag section 14C has reached a predetermined level to allow the separation of the panels 120 and 121 and the panels 122 and 123.

In the airbag 10L with such an arrangement, when an inflator is activated in a car crash, gas from the inflator first inflates the respective base ends of the right airbag section 12C and the left airbag section 14C. Thereafter, the inner pressure in the base-end chambers has reached a predetermined level, the tear seams 124 and 125 are torn open, so that the gas also flows into the respective front-end chambers of the right airbag section 12C and the left airbag section 14C to inflate them.

Also with the airbag 10L, the first inflated base ends of the right airbag section 12C and the left airbag section 14C come into contact with the component of the vehicle such as an instrument panel to become stable in position. Therefore the respective front ends of the right airbag section 12C and the left airbag section 14C become stable in position not only at the completion of inflation but also in the middle of inflation.

With the airbag 10L, the circulation of gas between the respective base ends and front ends of the right airbag section 12C and the left airbag section 14C is blocked until the inner pressure in the base-end chambers reaches a predetermined level, or the tear seams 124 and 125 are torn open; the gas from the inflator is substantially supplied only to the base-end chambers, so that the base-end chambers inflate very early.

In this embodiment, the panels 120 and 121 of the right airbag section 12C and the panels 122 and 123 of the left airbag section 14C are stitched together with the tear seams 124 and 125, respectively, so that the right airbag section 12C and the left airbag section 14C are each partitioned into the base end and the front end. However, the way of partitioning the right airbag section 12C and the left airbag section 14C into the respective base ends and front ends is not limited to that.

As in an airbag 10M of Fig. 24, the invention may provide means for restricting the lateral widths of the left airbag section and the right airbag section during inflation. The restriction of the widths of the left airbag section and the right airbag section decreases the volume of the entire airbag during inflation, thus allowing even a low-output inflator to inflate the airbag early.

Fig. 24 is a sectional view of the airbag 10M with such an arrangement, showing a part similar to that of Fig. 11(b).

Also the airbag 10M of Fig. 24 includes the right airbag section 12 to be inflated right forward of the occupant, the left airbag section 14 to be inflated left forward of the occupant, and the communicating section 16 for communicating the respective base ends of the right airbag section 12 and the left airbag section 14 with each other. The partition panel 70 partitions the interior of the right airbag section 12 and the interior of the left airbag section 14 into the respective base ends and front ends. The partition panel 70 has the openings 72 for communicating the base end of the right airbag section 12 with the front end and the base end of the left airbag section 14 with the front end, respectively.

The right airbag section 12 has therein a connecting belt 130 for connecting the front inner panel 22 and the front outer panel 26 which form the left and right sides at the front end of the right airbag section 12. The left airbag section 14 has therein a connecting belt 131 for connecting the front inner panel 24 and the front outer panel 28 which form the left and right sides at the front end of the left airbag section 14.

The connecting belts 130 and 131 prevent the front inner panels 22 and 24 from separating from the front outer panels 26 and 28, respectively, by lengths exceeding the lengths of the connecting belts 130 and 131, thus restricting the widths of the right airbag section 12 and the left airbag section 14 during inflation.

Other arrangements of the airbag 10M are the same as those of the airbag 10F of Figs. 11 to 14.

With the airbag 10M, the connecting belts 130 and 131 restrict the widths of the right airbag section 12 and the left airbag section 14 during inflation, so that the entire airbag 10M decreases in volume during inflation. Therefore, the airbag 10M can be inflated early even with a relatively small-output inflator.

Although the embodiment has connecting belts as means for restricting the widths of the right airbag section 12 and the left airbag section 14 during inflation, the means for restricting the widths is not limited to that.

It is to be understood that the above-described embodiments are only examples of the present invention and the invention is not limited to the embodiments illustrated. For example, although the above embodiments have the left airbag section and the right airbag section connected at the base ends thereof, they may be separated. The left airbag section and the right airbag section may be inflated by different inflators. The intermediate portions between the left airbag section and the right airbag section may be joined together with a panel, a cord, or a net and so on.

The invention may have the left airbag section and the right airbag section either in symmetry or in asymmetry. The volumes of the left airbag section and the right airbag section may be either equal or different.

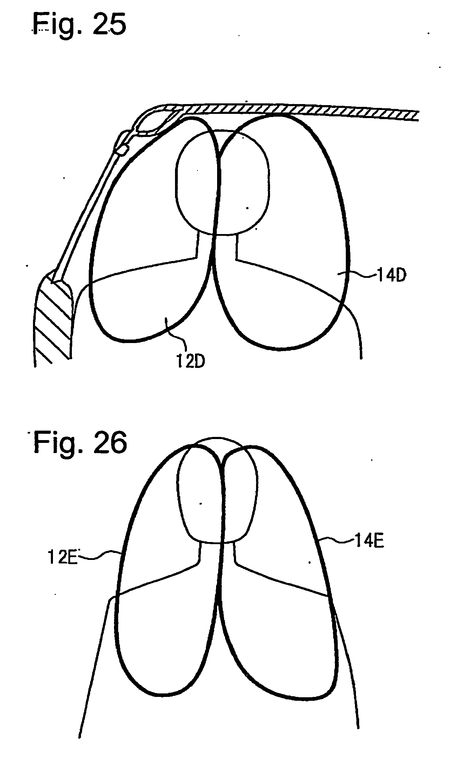

According to the invention, as Fig. 25 shows, the airbag (a right airbag section 12D in Fig. 25) to be disposed adjacent to an A pillar may be arranged such that the upper part is inclined to the vehicle chamber so as not to come into contact with the A pillar, a windshield, and a side window as much as possible.

According to the invention, as Fig. 26 shows, each of the airbags (a left airbag section 14E and a right airbag section 12E in Fig. 26) may have a lateral width that decreases with height.

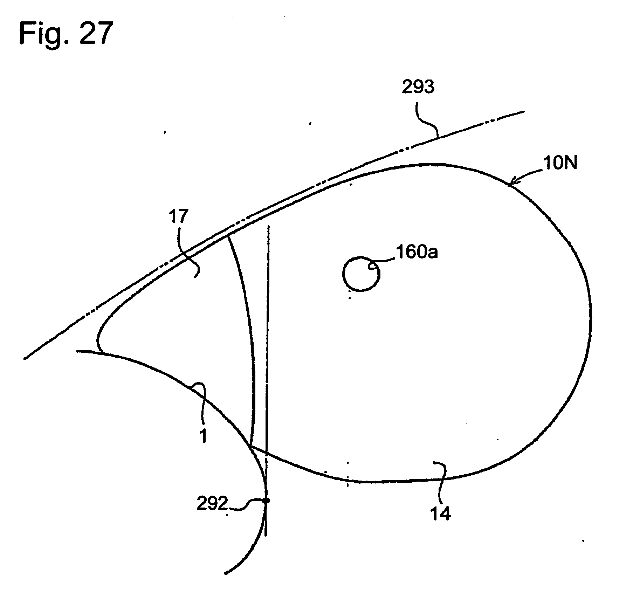

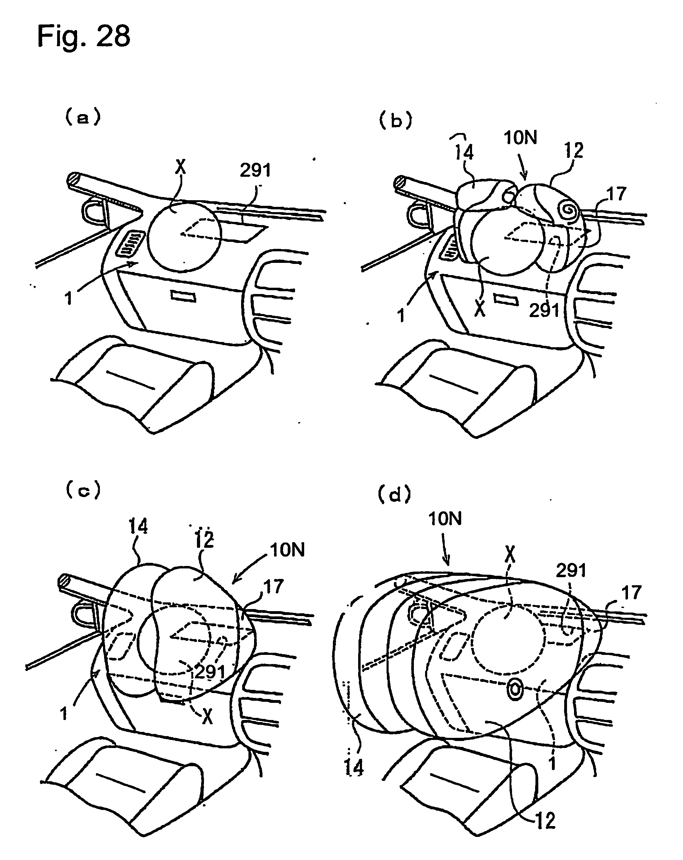

Referring to Figs. 27 and 28, a preferable structure of the airbag when the airbag system of the invention is mounted to an instrument panel will be described. Fig. 27 is a side view of the vicinity of an instrument panel in a vehicle cabin, showing an airbag 10N according to a preferred embodiment in an inflated state. Figs. 28(a) to (d) are perspective views showing the process of inflation of the airbag 10N.

Referring to Fig. 27, in the case of the airbag 10N, in a car crash, the base-end chamber 17 inflates along the upper surface of an instrument panel 1 through an airbag-system opening 291 (see Fig. 28(a)) provided in the upper surface of the instrument panel 1 and the right airbag section 12 and the left airbag section 14 each inflate toward the passenger (the rear of the car) while separating from the base-end chamber 17. Numeral 293 denotes a windshield of the car.

As shown in Fig. 27, the airbag 10N is constructed such that the rear end of the base-end chamber 17 of the inflated airbag 10N (the part of the outer surface of the inflated base-end chamber 17 closest to the rear of the car) is positioned closer to the front of the car than the rear end 292 of the instrument panel 1 in the cross direction of the car (the part of the outer surface of the instrument panel 1 closest to the car).

In the airbag 10N with such a structure, as shown in Fig. 28(b), even when an object X is present in the vicinity of the instrument panel 1, the object X does not or hardly come in contact with the base-end chamber 17 inflating along the upper surface of the instrument panel 1.

Referring to Figs. 28(c) and (d), the airbag 10N then inflates from the base-end chamber 17 toward the rear of the car, in which case the right airbag section 12 and the left airbag section 14 inflate by both sides of the object X. This reduces a force toward the rear of the car that is applied from the airbag 10N to the object X.

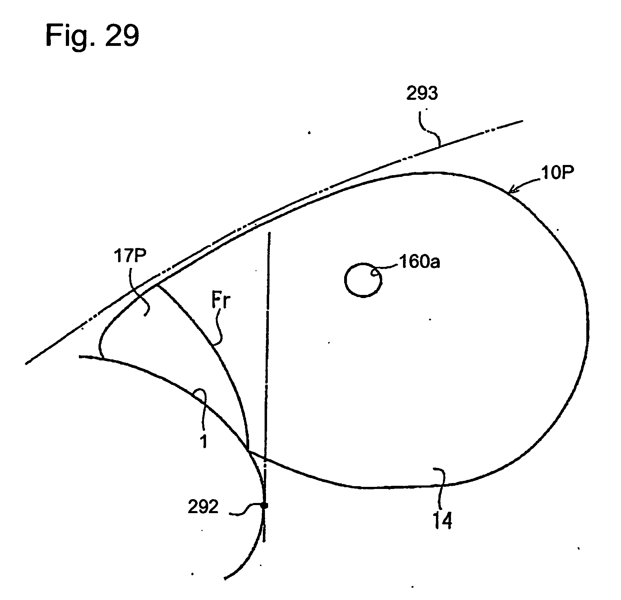

Fig. 29 is a side view of the vicinity of the instrument panel in a vehicle cabin, showing an airbag 10P according to another embodiment in an inflated state.

The rear end Fr of a base-end chamber 17P of the airbag 10P in the state inflated along the upper surface of the instrument panel 1 in the cross direction of the car (the boundary of the base-end chamber 17P with the right airbag section (not shown) and the left airbag section 14) is positioned closer to the front of the car than the rear end 292 of the instrument panel 1 in the cross direction (the part in the rearmost of the car of the outer surface of the instrument panel 1). The rear end Fr of the base-end chamber 17P inclines such that the upper part is positioned in the front of the car.

In the airbag 10P with such an arrangement, the rear end Fr of the base-end chamber 17P is separated from the rear end 292 of the instrument panel 1 toward the front of the car at the upper part when the base-end chamber 17P inflates. Therefore, even when the object X is located in the vicinity of the instrument panel 1, it is harder for the object X to come in contact with the inflating base-end chamber 17P.

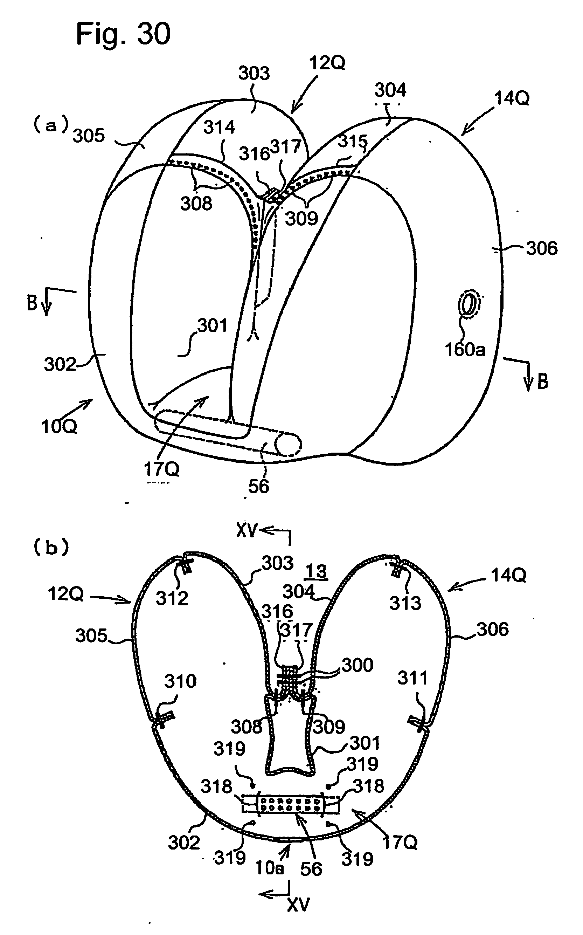

Referring to Figs. 30 to 46, other embodiments of the invention will be described.

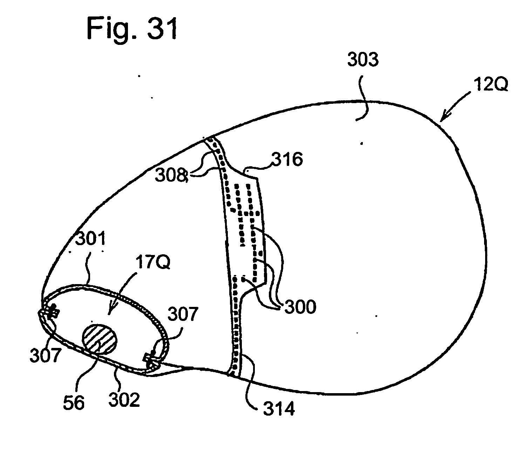

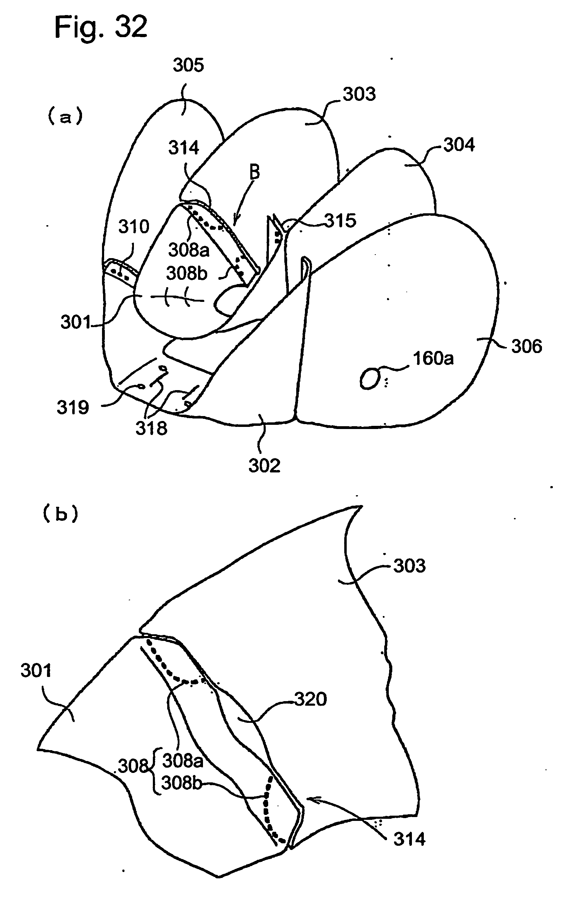

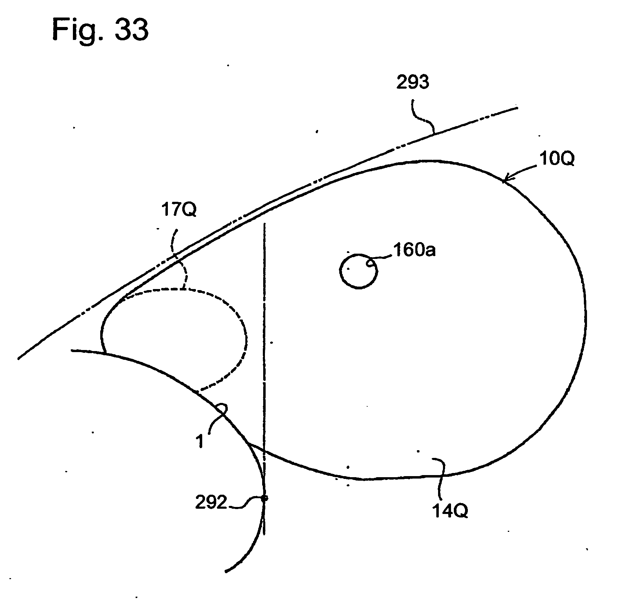

Fig. 30(a) is a perspective view of an airbag 10Q according to another embodiment; and Fig. 30(b) is a sectional view taken along line B-B of Fig. 30(a). Fig. 31 is a sectional view taken along line XV-XV of Fig. 30(b). Fig. 32(a) is an exploded perspective view of the airbag 10Q; Fig. 32(b) is an enlarged view of part B of Fig. 32(a). Fig. 33 is a side view of the vicinity of an instrument panel in a vehicle cabin, showing the airbag 10Q in an inflated state.

Referring to Figs. 30 and 31, the base-end chamber 17Q of the airbag 10Q is of a laterally extending cylindrical shape so as to communicate the base ends of a right airbag section 12Q and a left airbag section 14Q with each other.

The airbag 10Q is also a passenger protecting airbag. Referring to Fig. 33, the base-end chamber 17Q inflates along the upper surface of the instrument panel 1 through an airbag opening (not shown) provided in the upper surface of the instrument panel 1 in a car crash and the right airbag section 12Q and the left airbag section 14Q each inflate toward the passenger (the rear of the car) while separating from the base-end chamber 17Q.

As shown in Fig. 33, this embodiment is also constructed such that the rear end of the base-end chamber 17Q of the inflated airbag 10Q is positioned closer to the front of the car than the rear end 292 of the instrument panel 1 in the cross direction of the car. Accordingly, even when the object X is present in the vicinity of the instrument panel 1, it does not or hardly comes in contact with the base-end chamber 17 inflating along the upper surface of the instrument panel 1. With the airbag 10Q, the intermediate part of the right airbag section 12Q, viewed in the inflating direction, and the intermediate part of the left airbag section 14Q in the inflating direction are joined together with a seam (sewing thread) 300.

In this embodiment, the airbag 10Q is constructed of panels 301, 302, 303, 304, 305, and 306 joined by stitching.

Referring to Fig. 32(a), the panel 301 (rear inner panel) constructs the surfaces of the right airbag section 12Q and the left airbag section 14Q on the same side as the base end relative to the intermediate point, viewed in the inflating direction, and the surface of the base-end chamber 17Q, which are adjacent to the center of the airbag. The panel 302 (rear outer panel) constructs a surface (airbag outer surface) opposite to the rear inner panel 301.

The panels 303 and 304 (front inner panels or inside panels) construct the surfaces at the center of the airbag and on the same side of the right airbag section 12Q and the left airbag section 14Q as the distal end relative to the intermediate point, viewed in the inflating direction, (the opposing surfaces of the right airbag section 12Q and the left airbag section 14Q).

The panels 305 and 306 (front outer panels) construct the surfaces (airbag outer surfaces) opposite to the front inner panels 303 and 304.

Numeral 307 denotes a seam (stitching thread) that stitches the rear inner panel 301 and the rear outer panel 302 together. Numerals 308 and 309 indicate seams that stitch the rear inner panel 301 to the front inner panels 303 and 304, respectively. Numerals 310 and 311 indicate seams that stitch the rear outer panel 302 to the front outer panels 305 and 306, respectively. Numerals 312 and 313 indicate a seam that stitches the peripheries of the front inner panel 303 and the front outer panel 305 together and a seam that stitches the peripheries of the front inner panel 304 and the front outer panel 306 together, respectively.

Numeral 160a denotes a left-airbag-section vent hole provided in the front outer panel 306. Although no shown, the front outer panel 305 also has a similar right-airbag-section vent hole.

Referring to Fig. 30(a), the respective seam allowances (joint allowances) 314 and 315 of the rear inner panel 101 and the front inner panels 303 and 304 are arranged to be exposed to the outer surface of the right airbag section 12Q and the left airbag section 14Q of the airbag product, respectively. As shown in Figs. 30 and 31, tongue-shaped joint allowances 316 and 317 (only the joint allowance 316 is shown in Fig. 31) project from the seam allowances 314 and 315, respectively. As clearly shown in Fig. 30, particularly in Fig. 30(b), the joint allowances 316 and 317 are stitched together with a seam 300.

As described above, the right airbag section 12Q and the left airbag section 14Q are joined together at the intermediate parts of the facing parts, viewed in the inflating direction, with the respective seam allowances 314 and 315 of the rear inner panel 301 and the front inner panels 303 and 304.

The distance from the rear end 10e of the inflated airbag to the seam 300 is preferably from 30 to 70 percent, particularly, from about 40 to 55 percent of the length of the inflated airbag 10Q.

The rear outer panel 302 that constructs the base-end chamber 17Q is provided with a pair of slits 318 and 318 for an inflator to pass through. Also this embodiment includes the rod inflator 56, as shown in Figs. 30(a) and (b). Specifically, the rod inflator 56 is inserted in the slits 318 and 318 so as to pass through the base-end chamber 17Q along the width of the car, whose opposite ends are arranged outside the airbag 10Q.

Numeral 319 denotes a hole for a fastener (not shown) such as a bolt to pass through, for connecting the airbag 10Q to the casing (not shown) of the airbag system.

Other arrangements of the airbag 10Q and the arrangement of the airbag system including the airbag 10Q are similar to those of the embodiment in Figs. 1 and 2. The numerals in Figs. 30 to 33 the same as those of Figs. 1 and 2 indicate the same parts.

With the airbag 10Q, when the right airbag section 12Q and the left airbag section 14Q inflate from a folded state in storage and even when either one of the right airbag sections 12Q and 14Q inflates early and the other inflates later, the early-inflating airbag pulls the other later-inflating airbag to promote its inflation because the right airbag section 12Q and the left airbag section 14Q are joined together. Moreover, since the right airbag section 12Q and the left airbag section 14Q are joined together with the seam 300 at the intermediate part in the inflating direction, the early-inflating airbag begins to pull the other later-inflating airbag in the inflating direction at a relatively early stage after the beginning of inflation. Accordingly, both the right airbag section 12Q and the left airbag section 14Q inflate smoothly and laterally equally from the beginning of inflation.

The airbag 10Q is manufactured by the following procedure.

Referring to Fig. 32(a), the rear inner panel 301 and the front inner panels 303 and 304 are stitched together with the seams 308 and 309, respectively. The rear outer panel 302 and the front outer panels 305 and 306 are stitched together with the seams 310 and 311, respectively. At that time, the respective seam allowances 314 and 315 of the rear inner panel 301 and the front inner panels 303 and 304 are arranged on the side exposed to the outside of the airbag in the airbag produce.

According to this embodiment, as shown in Fig. 32(b), the rear inner panel 301 and the front inner panel 303 are stitched together only at opposite ends of the seam allowance 314 with the seam 308 (308a and 308b). Between the seams 308a and 308b, an opening 320 for reversing the airbag is formed.

Then the stitched body of the rear inner panel 301 and the front inner panels 303 and 304 and the stitched body of the rear outer panel 302 and the front outer panels 305 and 306 are superposed such that the surfaces exposed to the exterior of the airbag face each other in the state of an airbag product and the peripheries are then stitched together with the seams 307, 312, and 313. A reversed airbag intermediate product is thus produced.

The airbag intermediate product is reversed through the opening 320 formed in the seam allowance 314. Thereafter, the respective joint allowances 316 and 317 of the seam allowances 314 and 315 are stitched together with the seam 300 to complete the airbag 10Q product.

When the joint allowances 316 and 317 are stitched together, the opening 320 is closed with the seam 300.

Since the airbag 10Q is constructed of the plurality of panels, the outer surface of the airbag 10Q having a large area and a complicated shape can be made of the panels having a relatively small area without loss.

According to the embodiment, since the seam allowance 314 is provided with the opening 320 for reversing the airbag product during the process of manufacturing the airbag, as described above, the airbag intermediate product can easily be turned inside out even when the inflator opening is shaped like a slit, particularly as in this embodiment. Since the opening 320 is closed with the seam 300 when the joint allowances 316 and 317 are stitched together, the gas introduced from the inflator 56 into the right airbag section 12Q and the left airbag section 14Q does not leak from the opening 320.

When the inflator opening is shaped like a slit, the connecting strength of the inflator to the airbag is high.

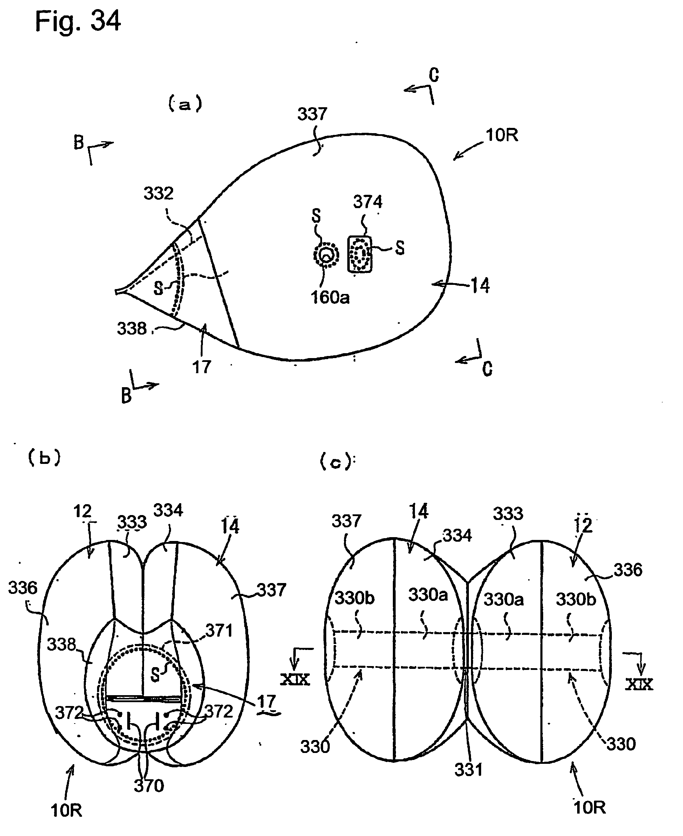

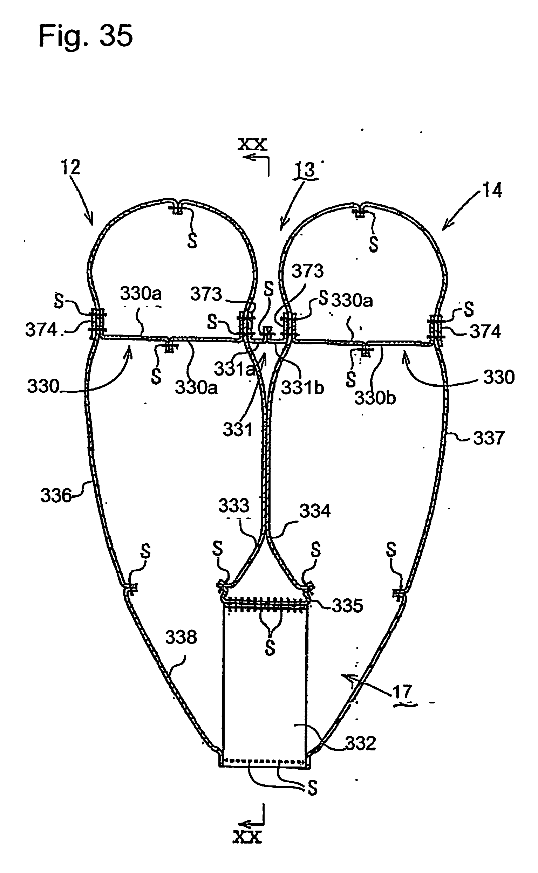

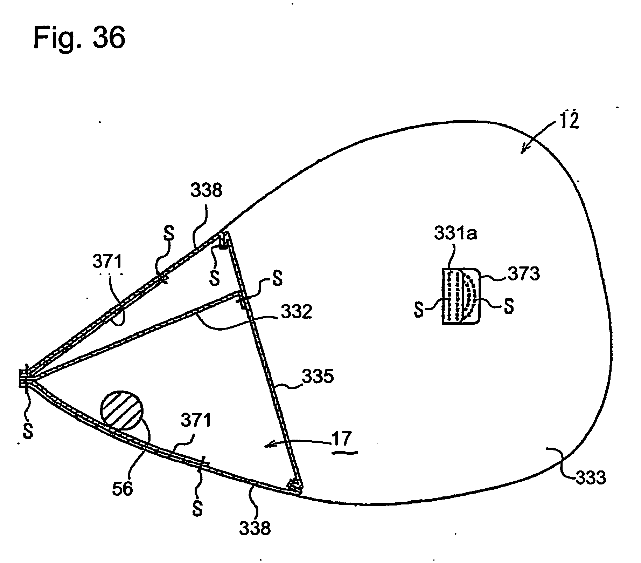

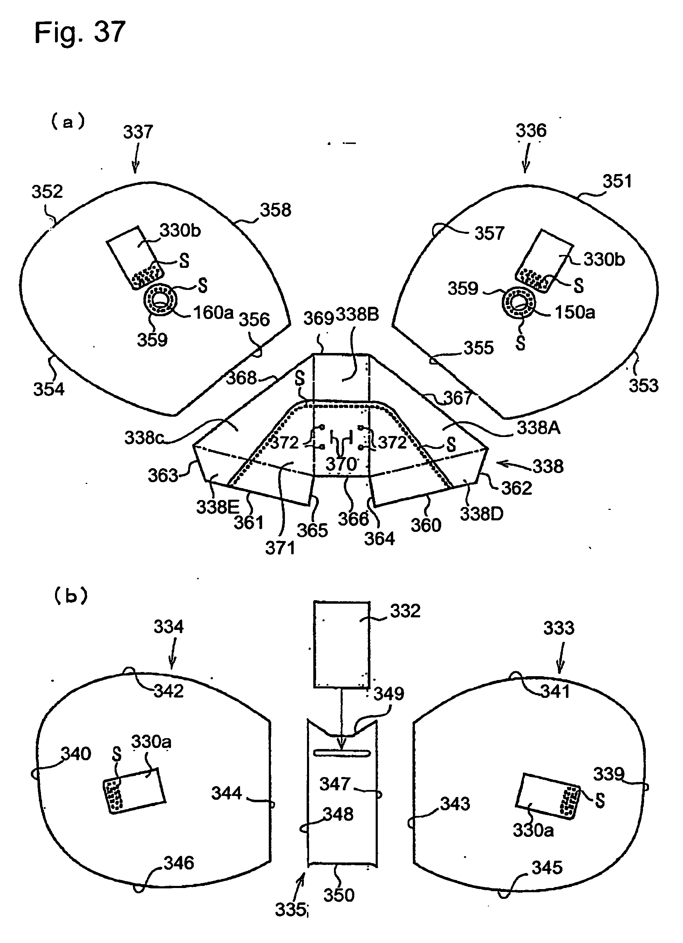

Fig. 34(a) is a side view of an airbag 10R according to an embodiment; Fig. 34(b) is an arrow diagram taken along line B-B of Fig. 34(a); and Fig. 34(c) is an arrow diagram taken along line C-C of Fig. 34 (a). Fig. 35 is a sectional view taken along line XIX-XIX of Fig. 35(c). Fig. 36 is a sectional view taken along line XX-XX of Fig. 35. Figs. 37(a) and (b) are exploded views (plan views) of the panel structure of the airbag 10R.

With the airbag 10R, the right airbag section 12 and the left airbag section 14 have width restricting belts 330 for restricting the lateral widths of the airbag sections 12 and 14 during inflation, respectively. The opposing surfaces (later-described inside panels 333 and 334) at the intermediate part of the airbag sections 12 and 14, viewed in the inflating direction, are joined together with a connecting belt 331. This embodiment includes a tether 332 for connecting the deepmost part (later-described intermediate panel 335) of the pocket between the right airbag section 12 and the left airbag section 14 with the base end of the base-end chamber 17 (rear side 366 of a later-described base-end panel 338).

The outer shell of the airbag 10R is constructed of a total of six panels: a right inside panel 333, a left inside panel 334, an intermediate panel 335 which connects the panels 333 and 334 together, a right outside panel 336, a left outside panel 337, and the base-end panel 338.

The right inside panel 333 corresponds to a right side 140R of the inside panel 140 of the airbag 10 (see Figs. 1 to 4) and constructs the inner surface of the right airbag section 12. The left inside panel 334 corresponds to a left side 140L of the inside panel 140 and constructs the inner surface of the left airbag section 14. The intermediate panel 335 corresponds to a turning part in the vicinity of the lateral middle of the inside panel 140 and constructs the deepmost pocket between the right airbag section 12 and the left airbag section 14.

Referring to Fig. 37(b), the peripheral sides of the right inside panel 333 and the left inside panel 334 are constructed of distal ends 339 and 340, upper sides 341 and 342, linear rear sides 343 and 344, and lower sides 345 and 346, respectively. The peripheral side of the intermediate panel 335 is constructed of a pair of sides 347 and 348 and an upper side 349 and a lower side 350 that connect the respective upper ends and lower ends together, respectively.

Referring to Fig. 37(a), the peripheral sides of the right outside panel 336 and the left outside panel 337 are constructed of distal ends 351 and 352, upper sides 353 and 354, linear rear sides 355 and 356, and lower sides 357 and 358, respectively. The right outside panel 336 constructs the outer surface of the right airbag section 12, while the left outside panel 337 constructs the outer surface of the left airbag section 14. The outside panels 336 and 337 each have the vent hole 150a, 160a. Numeral 359 denotes a reinforcing cloth stitched to the periphery of the vent holes 150a, 160a. Symbol S indicates the seam of the stitching.

In this embodiment, all of the right inside panel 333, the left inside panel 334, the right outside panel 336, and the left outside panel 337 are made of base cloth cut into the same outline (outer shape). The right inside panel 333 and the right outside panel 336 and the left inside panel 334 and the left outside panel 337 are each coated with a synthetic resin or the like at the opposing surface (surface that become the inside of the airbag when it is made into an airbag product). They have substantially the same shape and an inverse relationship in which the front and the back are opposite, as left and right hands.

As shown in Fig. 37(a), the base-end panel 338 has a right side surface 338A, a bottom surface 338B, a left side surface 338C, a right flap 338D constructing an upper right side, and a left flap 338E constructing an upper left side. The base-end panel 338 is bent so that the side surfaces 338A and 338C become substantially rectangular and has a surface open to the distal end of the airbag.

The entire periphery of the base-end panel 338 is constructed of the respective opposing sides 360 and 361 of the almost rectangular flaps 338D and 338E, the respective front sides (flap front sides) 362 and 363 of the flaps 338D and 338E, the respective rear sides 364 and 365 of the flaps 338D and 338E, a rear side 366 opposed to the rear sides 364 and 365, the respective front sides (side front sides) 367 and 368 of the side surfaces 338A and 338C, and a bottom front side 369 connecting the side front sides 367 and 338 together.

In this embodiment, all of the sides 360 to 369 are linear sides.

The bottom surface 338B has a pair of slits 370 and 370 for the rod inflator 56 to pass through. To the surfaces of the base-end panel 338 which become the inside of the airbag product (hereinafter, they are referred to as the respective "inner surfaces" of the panels), a reinforcing (heat-resisting) cloth 371 is stitched from the bottom surface 338B through the right and left side surfaces 338A and 338C and the flaps 338D and 338E. Numeral 372 indicates a hole for a fastener (not shown) such as a bolt to pass through for joining the bottom surface 338B to the casing (not shown) of the airbag system.

Each width restricting belt 330 of this embodiment is made of a pair of half belt sections 330a and 338b. Referring to Fig. 35, first ends of the half belt sections 330a are stitched to the inner surfaces of the inside panels 333 and 334. Numeral 373 indicates reinforcing clothes arranged opposite to the first ends of the half belt sections 330a (on the side adjacent to the outer surface of the panel, the same is applied to the following), with the inside panels 333 and 334 sandwiched therebetween, and stitched together. First ends of the half belt sections 330b are stitched to the respective inner surfaces of the outside panels 336 and 337. Numeral 374 indicates reinforcing clothes arranged opposite to the first ends of the half belt sections 330b, with the outside panels 336 and 337 sandwiched therebetween, and stitched together.

Respective second ends of the half belt sections 330a and 330b are stitched together, so that the right inside panel 333 and the right outside panel 336 and also the left inside panel 334 and the left outside panel 337 are joined together with the half belt sections 330a and 330b, respectively, thereby restricting the separation of them during the inflation of the airbag (the width of the right airbag section 12 and the left airbag section 14 during inflation).

In this embodiment, the connecting belt 331 is also constructed of a pair of half belt sections 331a and 331b. Referring to Fig. 35, first ends of the half belt sections 331a and 331b connect to the reinforcing clothes 373 stitched to the outer surfaces of the inside panels 333 and 334, respectively. Second ends of the half belt sections 331a and 331b are stitched together, so that the inside panels 333 and 334 are joined together through the half belt sections 331a and 331b, respectively. Thus, the intermediate parts of the right airbag section 12 and the left airbag section 14 in the inflating direction are joined together.

To make the airbag 10R, the rear side 343 of the right inside panel 333 and the rear side 344 of the left inside panel 334 are stitched to the sides 347 and 348 of the flat-spread intermediate panel 335, respectively. The first end of the half belt section 330a and the reinforcing cloth 373 are stitched to each of the inside panels 333 and 334. A first end of the tether 332 is stitched to the inner surface of the intermediate panel 335. The reinforcing cloth 359 is stitched to the periphery of the vent holes 150a, 160a in advance.

On the other hand, the rear side 355 of the right outside panel 336 and the rear side 356 of the left outside panel 337 are stitched to the side front sides 367 and 368 of the flat-spread base-end panel 338, respectively. The opposing sides 360 and 361 of the flaps 338D and 338E of the base-end panel 338 are then stitched together. The first end of the half belt section 130b and the reinforcing cloth 374 are stitched to each of the outside panels 336 and 337.

The right outside panel 336 and the right inside panel 333 are opposed so as to face the outer surfaces thereof when they are made into an airbag product, and the end distal sides 339 and 351, the upper sides 341 and 353, and the lower sides 345 and 357 are stitched together. The left outside panel 337 and the left inside panel 334 are opposed, and the distal sides 340 and 352, the upper sides 342 and 354, and the lower sides 346 and 358 are stitched together. The flap front sides 362 and 363 of the base-end panel 338 are stitched to the upper side 349 of the intermediate panel 335. The bottom front side 369 of the base-end panel 338 is stitched to the lower side 350 of the intermediate panel 335.

The stitching makes the airbag 10R inside out, i.e., causes the seam allowance to be exposed to the surface of the airbag. At that point in time, the flap rear sides 364 and 365 and the rear side 366 of the base-end panel 338 have not yet stitched together, thus being open.

Then the second end of the half belt section 330a attached to the right inside panel 333 and the second end of the half belt section 330b attached to the right outside panel 336 are stitched together. The second end of the half belt section 330a attached to the left inside panel 334 and the second end of the half belt section 330b attached to the left outside panel 337 are stitched together. Thereafter, the airbag is turned inside out through the opening. Then, the opening is stitched, with a second end of the tether 332 inserted therein. The half belt sections 331a and 331b of the connecting belt 331 which are attached to the inside panels 333 and 334 are stitched together through the reinforcing cloth 373, thus completing the airbag 10R.

In this embodiment, all of the inside panels 333 and 334 and the outside panels 336 and 337 that construct the outer shell of the right airbag section 12 and the left airbag section 14 are made of base fabrics having the same outline. Therefore, the base fabrics can be made with the same cutting equipment, which is greatly rational.

In this embodiment, all of the sides 360 to 369 that construct the entire periphery of the base-end panel 338 are linearly shaped. Accordingly, almost of the stitching of the panels can be straight stitching when the airbag 10R is stitched, having high work efficiency.

In the case of the airbag 10R, since the lateral widths of the right airbag section 12 and the left airbag section 14 during inflation are each restricted by the width restricting belt 330, the internal volumes of the right airbag section 12 and the left airbag section 14 are relatively small. Therefore, the right airbag section 12 and the left airbag section 14 can be inflated sufficiently early even with the inflator 56 having a small capacity.

Also with the airbag 10R, when either of the right airbag section 12 and the left airbag section 14 inflates early and the other inflates later at the time of the inflation of the right airbag section 12 and the left airbag section 14, the early-inflating airbag pulls the other later-inflating airbag to promote its inflation because the right airbag section 12 and the left airbag section 14 are joined together through the connecting belt 331. Moreover, since the right airbag section 12 and the left airbag section 14 are joined together at the intermediate point in the inflating direction, the early-inflating airbag begins to pull the other later-inflating airbag in the inflating direction at a relatively early stage after the beginning of inflation. Accordingly, both the right airbag section 12 and the left airbag section 14 inflate smoothly and laterally equally from the beginning of inflation.

In the case of the airbag 10R, the intermediate panel 335 that constructs the deepmost pocket between the right airbag section 12 and the left airbag section 14 is connected to the rear side 366 of the base-end panel 338 through the tether 332. Accordingly, the pocket between the inflated right airbag section 12 and left airbag section 14 can be made deep.

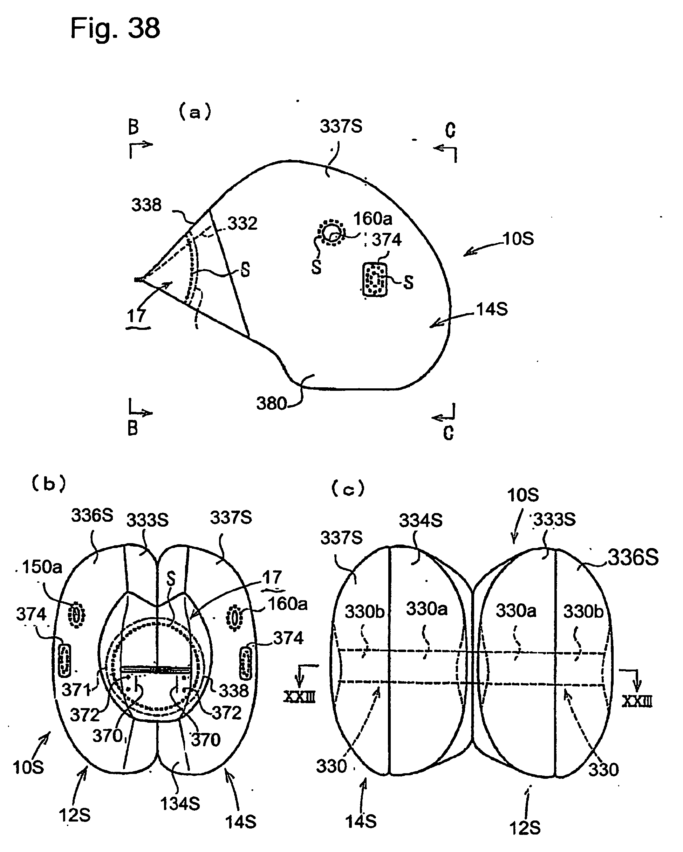

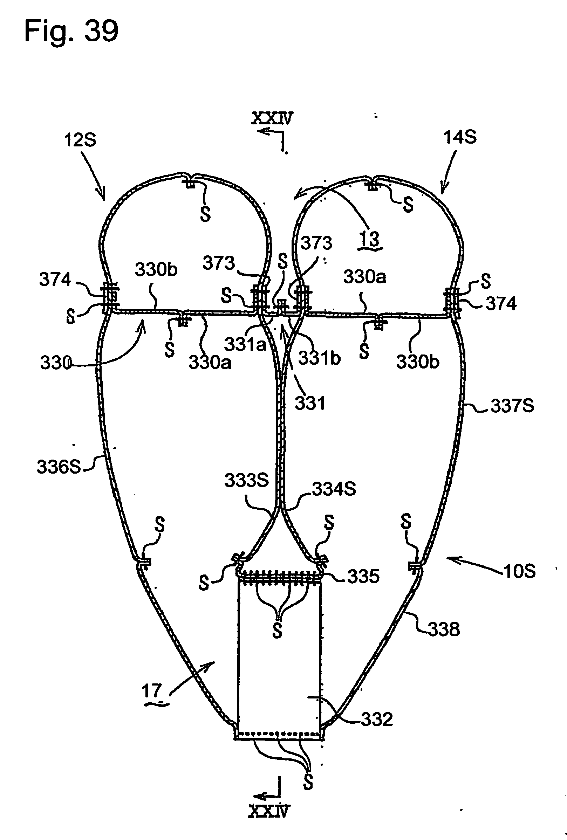

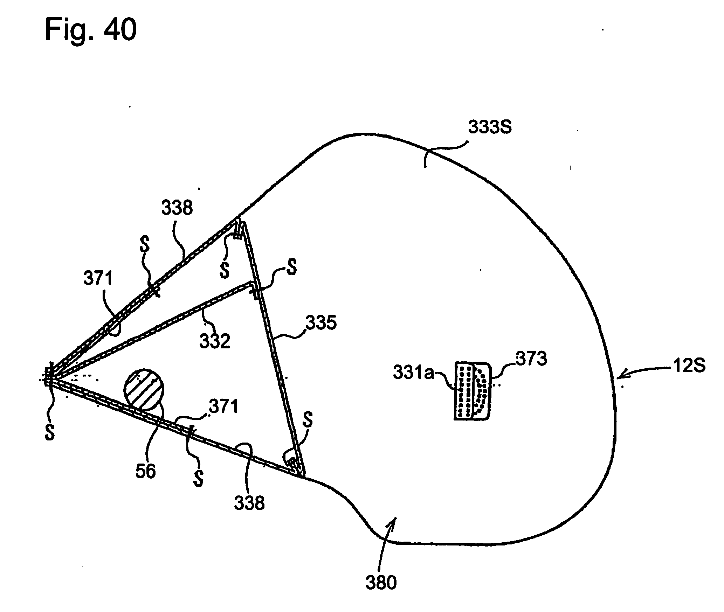

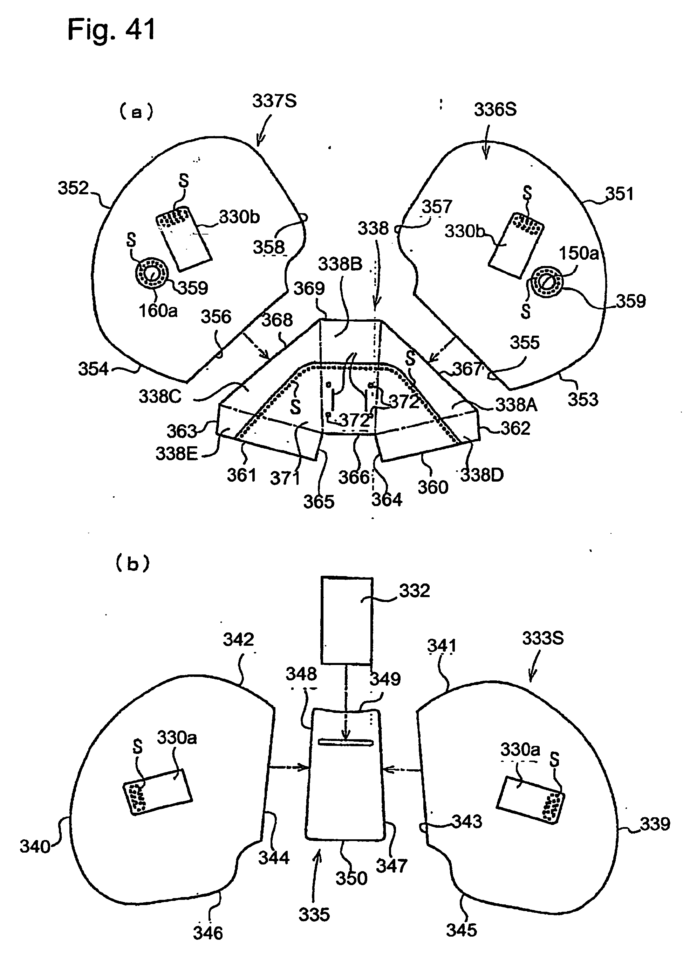

Fig. 38(a) is a side view of an airbag 10S according to another embodiment; Fig. 38(b) is an arrow diagram taken along ling B-B of Fig. 38(a); and Fig. 38(c) is an arrow diagram taken along ling C-C of Fig. 38(a). Fig. 39 is a sectional view taken along line XXIII-XXIII of Fig. 38(c). Fig. 40 is a sectional view taken along line XXIV-XXIV of Fig. 39. Figs. 41(a) and (b) are exploded views (plan views) of the panel structure of the airbag 10S.

In the case of the airbag 10S, as shown in Fig. 38(a), a flared section that protrudes downward is provided at each lower part of an inflated right airbag section 12S and left airbag section 14S and the amount of inflation toward the occupant (the rear of the car) is small at the upper parts of the right airbag section 12S and the left airbag section 14S. In other words, when the airbag 10S inflates, the ends of the right airbag section 12S and the left airbag section 14S bend downward.

Therefore, as shown in Fig. 41, inside panels 333S and 334S that construct the inner surfaces of the airbag sections 12S and 14S and outside panels 336S and 337S that construct the outer surfaces have respective lower sides 345, 346, 357, and 358 protruding downward and respective distal sides 339, 340, 351, and 352 inclined toward the front of the car (leftward in Fig. 38(a)) so as to be remote from the occupant at the upper part.

Other arrangements of the airbag 10S are substantially the same as those of the airbag 10R of Figs. 34 to 37, wherein the numerals of Figs. 38 to 41 the same as those of Figs. 34 to 37 indicate substantially the same parts.

The airbag 10S with such an arrangement has the right airbag section 12S and the left airbag section 14S inflating downward relative to the head of the occupant. Thus, it is preferable as an airbag that receives the region of the occupant from the stomach through the chest (the region lower than the head) in a car crash.

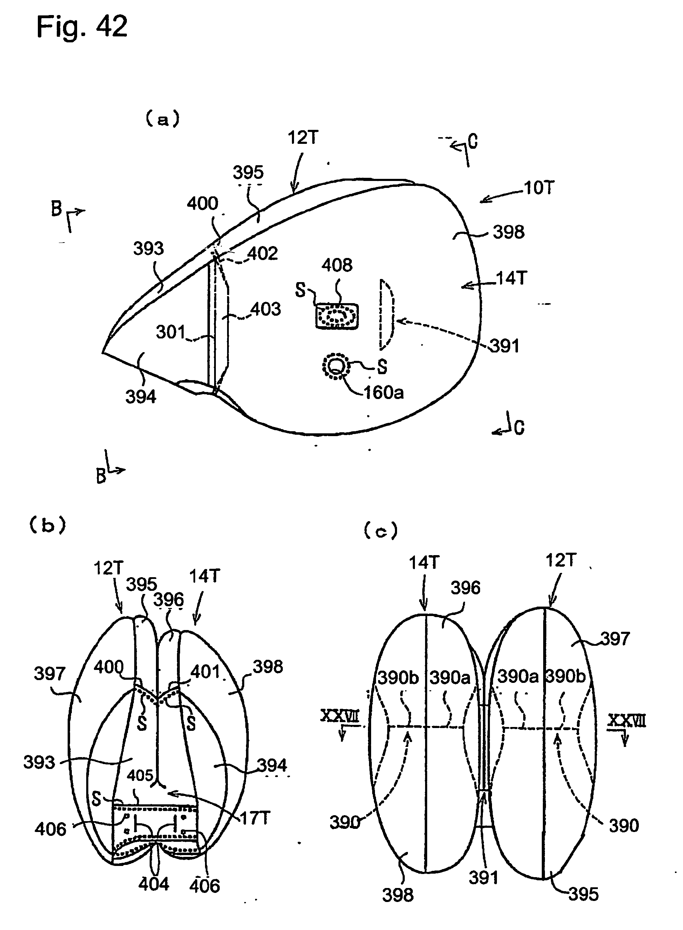

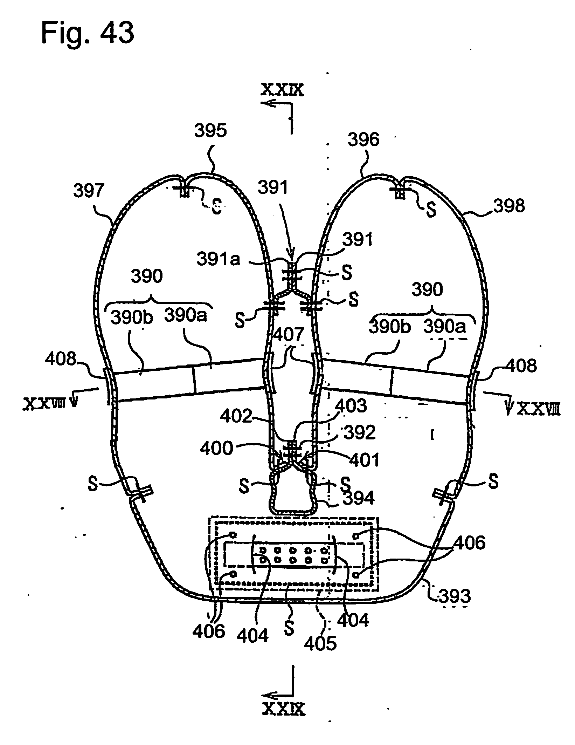

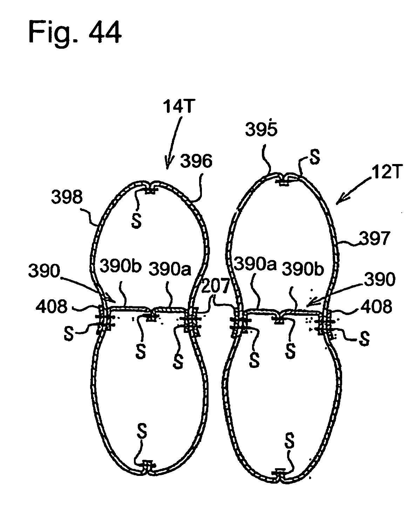

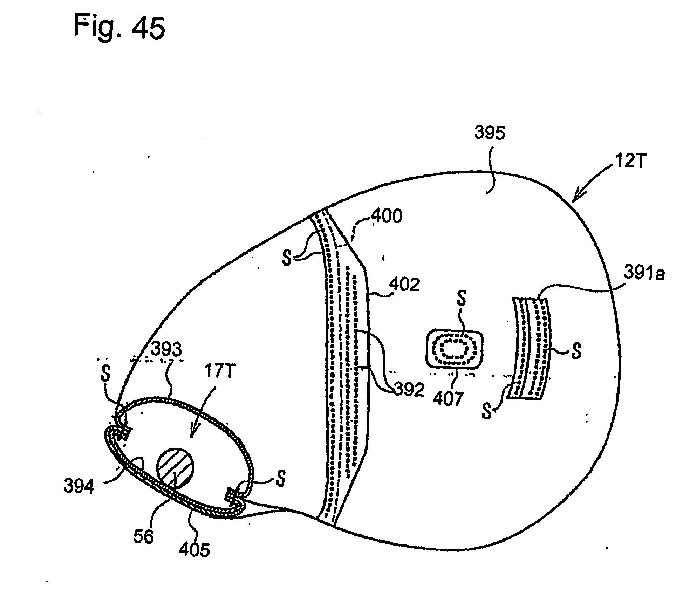

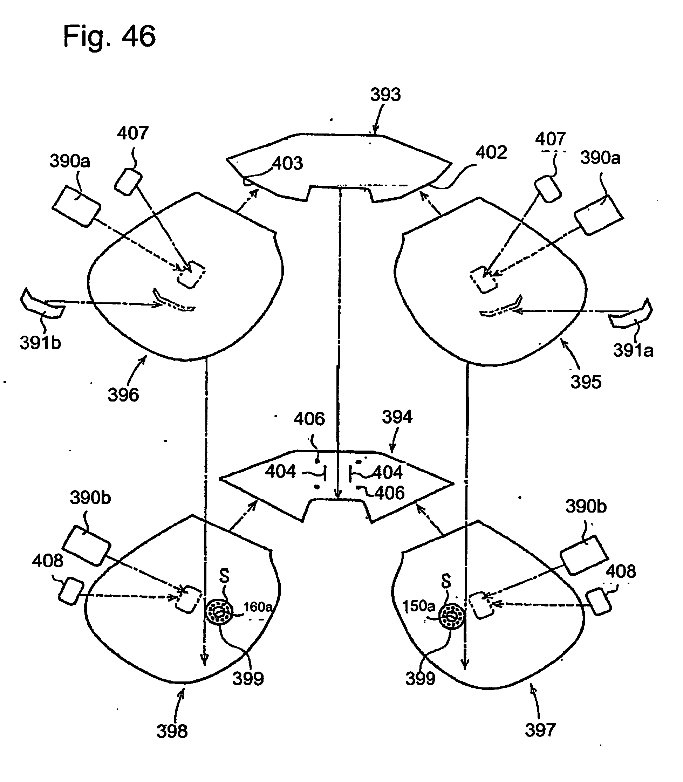

Fig. 42(a) is a side view of an airbag 10T according to another embodiment; Fig. 42(b) is an arrow diagram taken along ling B-B of Fig. 42(a); and Fig. 42(c) is an arrow diagram taken along ling C-C of Fig. 42(a). Fig. 43 is a sectional view taken along line XXVII-XXVII of Fig. 42(c). Fig. 44 is a sectional view taken along line XXVIII-XXVIII of Fig. 43. Fig. 45 is a sectional view taken along line XXIX-XXIX of Fig. 43. Fig. 46 is an exploded view (plan view) of the panel structure of the airbag 10T.

In the case of the airbag 10T, a right airbag section 12T is arranged in the center of a vehicle cabin (center side) and a left airbag section 14T is arranged on the side adjacent to a side door (A-pillar side). Referring to Fig. 42, the airbag 10T is constructed such that the upper part of the left airbag section 14T is lower than the upper part of the right airbag section 12T in an inflated state. This prevents the inflated left airbag section 14T from interfering with the A-pillar (not shown), stabling the inflating position of the airbag 10T.

With the airbag 10T, a base-end chamber 17T is of a laterally extending cylindrical shape so as to communicate the base ends of the right airbag section 12T and the left airbag section 14T with each other, as in the airbag 10Q of Figs. 30 to 33 (see Fig. 45).

The airbag 10T includes a width restricting belt 390 in each of the right airbag section 12T and the left airbag section 14T, for restricting the respective lateral widths of the airbag sections 12T and 14T during inflation.

With the airbag 10T, the opposing surfaces (later-described front inner panels 395 and 396) of the right airbag section 12T and the left airbag section 14T are connected together on the same sides as the distal end and the base end relative to the width restricting belt 390 in the respective inflating directions. The opposing surfaces of the airbag sections 12T and 14T are joined together with a connecting belt 391 at the end adjacent to the distal end relative to the width restricting belt 390, while joined (connected) together with a seam (stitching thread) 392 at the end adjacent to the base end relative to the width restricting belt 390.

In the embodiment, the outer shell of the airbag 10T is formed by stitching panels 393, 394, 395, 396, 397, and 398 together.

The panel 393 (rear inner panel) constructs the surfaces of the right airbag section 12T and the left airbag section 14T on the same side as the base end relative to the intermediate point, viewed in the inflating direction, and the surface of the base-end chamber 17T, which are adjacent to the center of the airbag. The panel 394 (rear outer panel) constructs a surface (airbag outer surface) opposite to the rear inner panel 393.

The panels 395 and 396 (front inner panels) construct the surfaces of the right airbag section 12T and the left airbag section 14T on the same side of the intermediate point as the distal end, viewed in the inflating direction, and as the center of the airbag (opposing surfaces of the right airbag section 12T and the left airbag section 14T).

The panels 397 and 398 (front outer panel) construct the surfaces (outer surface of the airbag) opposite to the front inner panels 395 and 396. In this embodiment, the opposing front inner panel 395 and front outer panel 397 and opposing front inner panel 396 and front outer panel 398 are each made of base fabrics cut into the same outline.

Symbol S indicates the seam of stitching.

The front outer panels 397 and 398 each have the vent hole 150a, 160a, respectively. Numeral 399 indicates a reinforcing cloth stitched to the periphery of the vent holes 150a, 160a.

Referring to Figs. 42(a) and 45, the respective seam allowances (joint allowances) 400 and 401 of the rear inner panel 393 and the front inner panels 395 and 396 are arranged to be exposed to the outer surfaces of the right airbag section 12T and the left airbag section 14T of the airbag product, respectively. As shown in Figs. 43 and 45, tongue-shaped joint allowances 402 and 403 (only the joint allowance 402 is shown in Fig. 45) project from the seam allowances 400 and 401, respectively. As clearly shown in Fig. 43, the joint allowances 402 and 403 are stitched together with a seam 392.

As described above, the right airbag section 12T and the left airbag section 14T are joined together at the intermediate parts of the facing parts, viewed in the inflating direction, with the respective seam allowances 400 and 401 of the rear inner panel 393 and the front inner panels 395 and 396.

The rear outer panel 394 is provided with a pair of slits 404 and 404 for the rod inflator 56 to pass through. The rear outer panel 394 has a reinforcing (heat-resisting) cloth 405 stitched thereto. Numeral 406 denotes a hole for a fastener (not shown) such as a bolt to pass through for connecting the rear outer panel 394 to the casing (not shown) of the airbag system.

Also in this embodiment, each of the width restricting belts 390 is made of a pair of half belt sections 390a and 390b. Referring to Fig. 44, a first end of the half belt section 390a is stitched to the respective inner surfaces of the front inner panels 395 and 396. Numeral 407 indicates a reinforcing cloth arranged opposite to each of the first ends of the half belt sections 390a (on the outer surface of the panel), with the front inner panels 395 and 396 sandwiched therebetween, and stitched together. First ends of the other half belt sections 390b are stitched to the respective inner surfaces of the outside panels 397 and 398. Numeral 408 indicates a reinforcing cloth arranged opposite to each of the first ends of the half belt sections 330b, with the outside panels 397 and 398 sandwiched therebetween, and stitched together.

Respective second ends of the half belt sections 390a and 390b are stitched together, so that the front inner panel 195 and the front outer panel 397 and also the front inner panel 396 and the front outer panel 398 are joined together with the half belt sections 390a and 390b, respectively, thereby restricting the separation of them during the inflation of the airbag (the width of the right airbag section 12T and the left airbag section 14T during inflation).

The connecting belt 391 is also constructed of a pair of half belt sections 391a and 391b. Referring to Fig. 44, first ends of the half belt sections 391a and 391b are stitched to the outer surfaces of the front inner panels 395 and 396, respectively, and second ends are stitched together, so that the front inner panels 395 and 396 are joined together through the half belt sections 391a and 391b, respectively. Thus, the right airbag section 12T and the left airbag section 14T are joined together.

Also in this embodiment, the front inside panel 395 and the front outer panel 397 of the right airbag section 12T and the front inner panel 396 and the front outer panel 398 of the left airbag section 14T are each made of base fabrics having the same outline. Therefore, the base fabrics can be made with the same cutting equipment, which is greatly rational.

Also in the case of the airbag 10T, since the lateral widths of the right airbag section 12T and the left airbag section 14T during inflation are restricted by the width restricting belts 390, the internal volumes of the right airbag section 12T and the left airbag section 14T are relatively small. Therefore, the right airbag section 12T and the left airbag section 14T can be inflated sufficiently early even with the inflator 56 having a small capacity.

Also with the airbag 10T, when either of the right airbag section 12T and the left airbag section 14T inflates early and the other inflates later at the time of the inflation of the right airbag section 12T and the left airbag section 14T, the early-inflating airbag pulls the other later-inflating airbag to promote its inflation because the right airbag section 12T and the left airbag section 14T are joined together through the connecting belt 391 and the seam 392. Moreover, since the right airbag section 12T and the left airbag section 14T are joined together at the intermediate part in the inflating direction, the early-inflating airbag begins to pull the other later-inflating airbag in the inflating direction at a relatively early stage after the beginning of inflation. Accordingly, both the right airbag section 12T and the left airbag section 14T inflate smoothly and laterally equally from the beginning of inflation.

### [Advantages]

As described above, the invention provides an airbag and an airbag system in which the base end inflates earlier than the front end. According to an embodiment, the invention further provides an airbag and an airbag system that is partitioned into a base end and a front end in which the base end inflates earlier than the front end. The invention provides an airbag and an airbag system that receives the left chest of an occupant with a left airbag section and receives the right chest with a right airbag section, in which the space between the airbags is opposed to the vicinity of the breast bones of the occupant. Furthermore, according to an embodiment of the invention, an airbag and an airbag system is provided in which both of the left airbag section and the right airbag section inflate smoothly and substantially bilaterally evenly from the early stage of inflation.

## Claims

1. An airbag for protecting a vehicle occupant, which is inflated with gas spouted from an inflator (56) disposed on the base end thereof in the direction in which the distal end moves away from the base end of the airbag, the airbag comprising:
a left airbag section (14; 14A-E; 14Q; 14T) to be inflated left forward of the occupant, for receiving the left chest of the occupant; and
a right airbag section (12; 12A-E; 12Q; 12T) to be inflated right forward of the occupant, for receiving the right chest of the occupant; and
a base-end chamber (17; 17A; 17P; 17Q; 17T) formed at the base end of the airbag, gas from the inflator (56) being supplied through the base-end chamber into the left airbag section (14; 14A-E; 14Q; 14T) and the right airbag section (12, 12A-E; 12Q; 12T),
wherein front ends of the left airbag section (14; 14A-E; 14Q; 14T) and the right airbag section (12; 12A-E; 12Q; 12T) are noncontiguous; and
wherein a space (13) opened to the occupant is formed between the front ends of the left airbag section (14; 14A-E; 14Q; 14T) and the right airbag section (12; 12A-E; 12Q; 12T) during the inflation of the airbag,
**characterized in that**
the distance between the extreme ends of the left airbag section (14; 14A-E; 14Q; 14T) and the right airbag section (12; 12A-E; 14Q; 14T) is from 150 mm to 450 mm with the airbag inflated; **in that**
the horizontal distance from the extreme end to the deepmost part of the space is from 280 mm to 480 mm; and **in that**
intermediate portions in the direction of the inflation, in the area where the left airbag section (14; 14A-E; 14Q; 14T) and the right airbag section (12; 12A-E; 12Q; 12T) face each other, are connected with each other.

2. An airbag according to claim 1, further comprising partitioning means (70; 86; 90, 91; 106; 124, 125) for partitioning each of the left airbag section (14; 14A; 14B) and the right airbag section (12; 12A; 12B) into the base-end chamber (17; 17A) and a distal end.

3. An airbag according to claim 2, wherein the partitioning means (70; 90, 91; 106) has an opening (72; 72A, 72B; 93, 94; 97; 108, 109) for communicating the base end and the distal end with each other.

4. An airbag according to claim 3, wherein the left airbag section (14B) and the right airbag section (12B) are different in volume, and wherein that airbag section of the left and right airbag section having a larger volume has an opening having a larger area.

5. An airbag according to claim 3 or 4, further comprising means (80; 98) for closing the opening (72; 97) until the pressure of gas in the base-end chamber (17) reaches a predetermined level.

6. An airbag according to claim 5, wherein the closing means (80; 98) is a tear seam.

7. An airbag according to any one of claims 2 to 6,
further comprising means for opening the partitioning means (124, 125) when the pressure of gas in the base-end has reached a predetermined level.

8. An airbag according to claim 7, wherein the partitioning means (124, 125) is a tear seam.

9. An airbag according to any one of claims 2 to 8, wherein a lower part of the partitioning means (70) is separated from the base end more than an upper part.

10. An airbag according to any one of the preceding claims, further comprising:
an inside panel (140; 140A; 303, 304; 333, 334, 335; 333S, 334S, 335S; 402, 403) extending from a front end of the right airbag section (12; 12Q; 12T) through a respective opposing surface of the right airbag section and the left airbag section (14; 14Q; 14T) to a front end of the left airbag section;
a right outside panel (150; 305; 336; 336S; 397) forming an outer surface of the right airbag section (12; 12Q; 12T);
a left outside panel (160; 306; 337; 337S; 398) forming an outer surface of the left airbag section (14; 14Q; 14T); and
a base-end panel (170; 302; 338; 393) forming the base end of the airbag;
wherein the base-end chamber is formed by the base-end panel (170; 302; 338; 393).

11. An airbag according to claim 10, wherein
upper rims of the left and right outside panels (150, 160; 305, 306; 336, 337; 336S, 337S; 397, 398) are connected to an upper rim of the inside panel (140; 140A; 303 304; 333, 334, 335; 333S, 334S, 335S; 402, 403);
lower rims of the left and right outside panels are connected to a lower rim of the inside panel;
distal ends of the left and right outside panels are connected to a front end of the inside panel; and
the base-end panel (170; 302; 338; 393) is connected to the base ends of the left and right outside panels, a base end upper-rim and a base end lower-rim of the inside panel.

12. An airbag according to claim 10 or 11, further comprising a tether (83; 87; 332) for connecting a base end of the inside panel (140; 140A; 303, 304; 333, 334, 335; 333S, 334S, 335S; 402, 403) and a base of the base-end panel (170; 338) together.

13. An airbag according to any one of claims 10 to 12, further comprising a connection panel (86) for connecting the base end of the left outside panel (160) and the base end of the right outside panel (150) together to divide the interior of the left outside panel and the interior of the right outside panel from the base-end chamber (17).

14. An airbag according to claim 12 and claim 13, wherein the connection panel (86) and the tether (87) being integrated to one.

15. An airbag according to any one of claims 1 to 14, further comprising a gas bag (190; 190A) in the base-end chamber (17; 17A), for receiving the gas from the inflator (56); wherein
the gas bag (190, 190A) includes openings (192, 194; 198) for discharging the gas from the interior into the left airbag section (14) and the right airbag section (12), respectively.

16. An airbag according to any one of the preceding claims, wherein the left airbag section and the right airbag section are inflated by a common inflator (56).

17. An airbag according to any one of the preceding claims, further comprising means (130, 131; 330; 390) for restricting widths of the inflated left airbag section (14; 14A-E; 14Q; 14T) and right airbag section (12; 12A-E; 12Q; 12T).

18. An airbag according to any one of the preceding claims, wherein:
the left airbag section (14; 14A-E; 14Q; 14T) and the right airbag section (12; 12A-E; 12Q; 12T) are arranged so that the respective base ends of the left and right airbag sections (14; 14A-E; 12; 12A-E; 12Q; 12T) inflate toward the occupant along an upper surface of an instrument panel (1); and
a lower part of the distal end in the direction of inflation of the base end further projects from a rim of the upper surface of the instrument panel (1) adjacent to the occupant in a state in which the left airbag section (14; 14A-E; 14Q; 14T) and the right airbag section (12; 12A-E; 12Q; 12T) are inflated.

19. An airbag system comprising an airbag and an inflator (56) for inflating the airbag, wherein
the airbag is an airbag according to any one of claims 1 to 18.

20. A vehicle comprising the airbag system according to claim 19.

21. A vehicle according to claim 20, wherein the airbag system is a passenger airbag system mounted to the instrument panel (1) of the vehicle; and
the rear end of the base-end chamber (17; 17A; 17P; 17Q; 17T) of the inflated airbag is closer to the front of the vehicle than the rear end of the instrument panel (1) in the cross direction of the vehicle.

## Patentansprüche

1. Airbag zum Schutz eines Fahrzeuginsassen, welcher mit einem Gas aufgeblasen wird, welches von einer Aufblasvorrichtung (56), welche auf dem Basisende davon angeordnet ist, in der Richtung ausgestoßen wird, in welcher sich das distale Ende von dem Basisende des Airbags weg bewegt, wobei der Airbag umfasst:
einen linken Airbagabschnitt (14; 14A-E; 14Q; 14T), welcher links vor dem Insassen aufgeblasen werden soll, um die linke Brust des Insassen aufzunehmen; und
einen rechten Airbagabschnitt (12; 12A-E; 12Q; 12T), welcher rechts vor dem Insassen aufgeblasen werden soll, um die rechte Brust des Insassen aufzunehmen; und
eine Basisendkammer (17; 17A; 17P; 17Q; 17T), welche an dem Basisende des Airbags ausgebildet ist, wobei das Gas von der Aufblasvorrichtung (56) durch die Basisendkammer in den linken Airbagabschnitt (14; 14A-E; 14Q; 14T) und den rechten Airbagabschnitt (12; 12A-E; 12Q; 12T) geführt wird,
wobei vordere Enden des linken Airbagabschnitts (14; 14A-E; 14Q; 14T) und des rechten Airbagabschnitts (12; 12A-E; 12Q; 12T) nicht zusammenhängend sind; und
wobei ein Raum (13), welcher zu dem Insassen geöffnet ist, zwischen den vorderen Enden des linken Airbagabschnitts (14; 14A-E; 14Q; 14T) und des rechten Airbagabschnitts (12; 12A-E; 12Q; 12T) während des Aufblasens des Airbags ausgebildet ist,
**dadurch gekennzeichnet,**
**dass** der Abstand zwischen den äußeren Enden des linken Airbagabschnitts (14; 14A-E; 14Q; 14T) und des rechten Airbagabschnitts (12; 12A-E; 12Q; 12T) 150 mm bis 450 mm beträgt, wenn der Airbag aufgeblasen ist;
**dass** der horizontale Abstand von dem äußeren Ende zu dem tiefsten Teil des Raumes 280 mm bis 480 mm beträgt; und
**dass** die Zwischenabschnitte in der Aufblasrichtung in dem Bereich, wo sich der linke Airbagabschnitt (14; 14A-E; 14Q; 14T) und der rechte Airbagabschnitt (12; 12A-E; 12Q; 12T) einander gegenüberliegen, miteinander verbunden sind.

2. Airbag nach Anspruch 1, weiter Teilungsmittel (70; 86; 90, 91; 106; 124, 125) umfassend, um den linken Airbagabschnitt (14; 14A; 14B) und den rechten Airbagabschnitt (12; 12A; 12B) jeweils in die Basisendkammer (17; 17A) und ein distales Ende aufzuteilen.

3. Airbag nach Anspruch 2, wobei die Teilungsmittel (70; 90, 91; 106) eine Öffnung (72; 72A, 72B; 93, 94; 97; 108, 109) aufweisen, um das Basisende und das distale Ende miteinander zu verbinden.

4. Airbag nach Anspruch 3, wobei der linke Airbagabschnitt (14B) und der rechte Airbagabschnitt (12B) ein unterschiedliches Volumen aufweisen, und wobei derjenige Airbagabschnitt des linken und rechten Airbagabschnitts, welcher ein größeres Volumen aufweist, eine Öffnung mit einer größeren Fläche aufweist.

5. Airbag nach Anspruch 3 oder 4, weiter Mittel (80; 98) umfassend, um die Öffnung (72; 97) zu verschließen, bis der Druck eines Gases in der Basisendkammer (17) eine vorbestimmtes Niveau erreicht.

6. Airbag nach Anspruch 5, wobei die Verschlussmittel (80; 98) eine Reißnaht sind.

7. Airbag nach einem der Ansprüche 2 bis 6, weiter Mittel umfassend, um die Teilungsmittel (124, 125) zu öffnen, wenn der Druck eines Gases in dem Basisende ein vorbestimmtes Niveau erreicht hat.

8. Airbag nach Anspruch 7, wobei die Teilungsmittel (124, 125) eine Reißnaht sind.

9. Airbag nach einem der Ansprüche 2 bis 8, wobei ein unterer Teil der Teilungsmittel (70) von dem Basisende mehr als ein oberer Teil getrennt ist.

10. Airbag nach einem der vorhergehenden Ansprüche, weiter umfassend:
eine innere Stoffbahn (140; 140A; 303, 304; 333, 334, 335; 333S, 334S, 335S; 402, 403), welche sich von einem vorderen Ende des rechten Airbagabschnitts (12; 12Q; 12T) durch eine entsprechende gegenüberliegende Öffnung des rechten Airbagabschnitts und des linken Airbagabschnitts (14; 14Q; 14T) zu einem vorderen Ende des linken Airbagabschnitts erstreckt;
eine rechte äußere Stoffbahn (150; 305; 336; 336S; 397), welche eine äußere Oberfläche des rechten Airbagabschnitts (12; 12Q; 12T) ausbildet;
eine linke äußere Stoffbahn (160; 306; 337; 337S; 398), welche eine äußere Oberfläche des linken Airbagabschnitts (14; 14Q; 14T) ausbildet; und
eine Basisendstoffbahn (170; 302; 338; 393), welche das Basisende des Airbags ausbildet;
wobei die Basisendkammer durch die Basisendstoffbahn (170; 302; 338; 393) ausgebildet ist.

11. Airbag nach Anspruch 10,
wobei obere Ränder der linken und der rechten äußeren Stoffbahn (150, 160; 305, 306; 336, 337; 336S, 337S; 397, 398) mit einem oberen Rand der inneren Stoffbahn (140; 140A; 303, 304; 333, 334, 335; 333S, 334S, 335S; 402, 403) verbunden sind;
wobei untere Ränder der linken und der rechten äußeren Stoffbahn mit einem unteren Rand der inneren Stoffbahn verbunden sind;
wobei distale Enden der linken und der rechten äußeren Stoffbahn mit einem vorderen Ende der inneren Stoffbahn verbunden sind; und
wobei die Basisendstoffbahn (170; 302; 338; 393) mit den Basisenden der linken und der rechten äußeren Stoffbahn, einem oberen Rand des Basisendes und einem unteren Rand des Basisendes der inneren Stoffbahn verbunden ist.

12. Airbag nach Anspruch 10 oder 11, weiter ein Haltemittel (83; 87; 332) umfassend, um ein Basisende der inneren Stoffbahn (140; 140A; 303, 304; 333, 334, 335; 333S, 334S, 335S; 402, 403) und eine Basis der Basisendstoffbahn (170; 338) miteinander zu verbinden.

13. Airbag nach einem der Ansprüche 10 bis 12, weiter eine Verbindungsstoffbahn (86) umfassend, um das Basisende der linken äußeren Stoffbahn (160) und das Basisende der rechten äußeren Stoffbahn (150) miteinander zu verbinden, um das Innere der linken äußeren Stoffbahn und das Innere der rechten äußeren Stoffbahn von der Basisendkammer (17) abzuteilen.

14. Airbag nach Anspruch 12 und Anspruch 13, wobei die Verbindungsstoffbahn (86) und das Haltemittel (87) zu einem integriert sind.

15. Airbag nach einem der Ansprüche 1 bis 14, weiter einen Gassack (190; 190A) in der Basisendkammer (17; 17A) umfassend, um das Gas von der Aufblasvorrichtung (56) aufzunehmen;
wobei der Gassack (190; 190A) Öffnungen (192, 194; 198) aufweist, um das Gas von dem Inneren in den linken Airbagabschnitt (14) bzw. den rechten Airbagabschnitt (12) abzuleiten.

16. Airbag nach einem der vorhergehenden Ansprüche, wobei der linke Airbagabschnitt und der rechte Airbagabschnitt durch eine gemeinsame Aufblasvorrichtung (56) aufgeblasen werden.

17. Airbag nach einem der vorhergehenden Ansprüche, weiter Mittel (130, 131; 330; 390) umfassend, um Breiten des aufgeblasenen linken Airbagabschnitts (14; 14A-E; 14Q; 14T) und rechten Airbagabschnitts (12; 12A-E; 12Q; 12T) zu begrenzen.

18. Airbag nach einem der vorhergehenden Ansprüche, wobei:
der linke Airbagabschnitt (14; 14A-E; 14Q; 14T) und der rechte Airbagabschnitt (12; 12A-E; 12Q; 12T) derart angeordnet sind, dass die entsprechenden Basisenden des linken und des rechten Airbagabschnitts (14; 14A-E; 14Q; 14T; 12; 12A-E; 12Q; 12T) sich entlang einer oberen Oberfläche eines Armaturenbrett (1) zu dem Insassen hin aufblasen; und
ein unterer Teil des distalen Endes in der Aufblasrichtung des Basisendes weiter von einem Rand der oberen Oberfläche des Armaturenbretts (1) benachbart zu dem Insassen in einem Zustand hervorragt, in welchem der linke Airbagabschnitt (14; 14A-E; 14Q; 14T) und der rechte Airbagabschnitt (12; 12A-E; 12Q; 12T) aufgeblasen sind.

19. Airbag-System, welches einen Airbag und eine Aufblasvorrichtung (56) umfasst, um den Airbag aufzublasen,
wobei der Airbag ein Airbag nach einem der Ansprüche 1 bis 18 ist.

20. Fahrzeug umfassend das Airbag-System nach Anspruch 19.

21. Fahrzeug nach Anspruch 20, wobei das Airbag-System ein Airbag-System für einen Insassen ist, welches an dem Armaturenbrett (1) des Fahrzeugs angebracht ist; und
wobei das hintere Ende der Basisendkammer (17; 17A; 17 P; 17Q; 17T) des aufgeblasenen Airbags in der Querrichtung des Fahrzeugs dichter an der Vorderseite des Fahrzeugs liegt als das hintere Ende des Armaturenbretts (1).

## Revendications

1. Un coussin gonflable de sécurité, pour protéger un occupant de véhicule, qui est gonflé avec du gaz jaillissant à partir d'un gonfleur (56) disposé sur l'extrémité de base du coussin gonflable, dans la direction dans laquelle l'extrémité distale part de l'extrémité de base du coussin gonflable, le coussin gonflable comprenant:
- une section gauche de coussin gonflable (14; 14A-E; 14Q; 14T) destinée à être gonflée à l'avant gauche de l'occupant, pour recevoir le thorax gauche de l'occupant; et
- une section droite de coussin gonflable (12; 12A-E; 12Q; 12T) destinée à être gonflée à l'avant droit de l'occupant, pour recevoir le thorax droit de l'occupant; et
- une chambre d'extrémité de base (17; 17A; 17P; 17Q; 17T) formée à l'extrémité de base du coussin gonflable, le gaz provenant du gonfleur (56) étant fourni via la chambre d'extrémité de base dans la section gauche de coussin gonflable (14; 14A-E; 14Q; 14T) et la section droite de coussin gonflable (12; 12A-E; 12Q; 12T),
dans lequel les extrémités avant de la section gauche de coussin gonflable (14; 14A-E; 14Q; 14T) et de la section droite de coussin gonflable (12; 12A-E; 12Q; 12T) sont non contiguës; et
dans lequel un espace (13) ouvert vers l'occupant est formé entre les extrémités avant de la section gauche de coussin gonflable (14; 14A-E; 14Q; 14T) et de la section droite de coussin gonflable (12; 12A-E; 12Q; 12T) pendant le gonflage du coussin gonflable,
**caractérisé en ce que**
- la distance entre les extrémités terminales de la section gauche de coussin gonflable (14; 14A-E; 14Q; 14T) et de la section droite de coussin gonflable (12; 12A-E; 14Q; 14T) est comprise entre 150 mm et 450 mm lorsque le coussin gonflable est gonflé;
**en ce que**
- la distance horizontale, depuis l'extrémité terminale jusqu'à la partie la plus en profondeur de l'espace, est comprise entre 280 mm et 480 mm;
et **en ce que**
- les portions intermédiaires dans la direction du gonflage, dans la zone où se font face la section gauche de coussin gonflable (14; 14A-E; 14Q; 14T) et la section droite de coussin gonflable (12; 12A-E; 12Q; 12T), sont raccordées entre elles.

2. Un coussin gonflable selon la revendication 1, comprenant en outre un moyen de cloisonnement (70; 86; 90, 91; 106; 124, 125) pour cloisonner chacune de la section gauche de coussin gonflable (14; 14A; 14B) et de la section droite de coussin gonflable (12; 12A; 12B) afin de former la chambre d'extrémité de base (17; 17A) et une extrémité distale.

3. Un coussin gonflable selon la revendication 2, dans lequel le moyen de cloisonnement (70; 90, 91; 106) comporte une ouverture (72; 72A, 72B; 93, 94; 97; 108, 109) pour faire communiquer l'extrémité de base et l'extrémité distale entre elles.

4. Un coussin gonflable selon la revendication 3, dans lequel la section gauche de coussin gonflable (14B) et la section droite de coussin gonflable (12B) sont différentes en volume, et dans lequel cette section de coussin gonflable de la section gauche et droite de coussin gonflable comportant un volume plus important, présente une ouverture de superficie plus importante.

5. Un coussin gonflable selon les revendications 3 ou 4, comprenant en outre un moyen (80; 98) pour fermer l'ouverture (72; 97) jusqu'à ce que la pression du gaz dans la chambre d'extrémité de base (17) atteigne un niveau prédéterminé.

6. Un coussin gonflable selon la revendication 5, dans lequel le moyen de fermeture (80; 98) est une couture déchirable.

7. Un coussin gonflable selon l'une quelconque des revendications 2 à 6, comprenant en outre un moyen pour ouvrir le moyen de cloisonnement (124, 125) lorsque la pression du gaz dans l'extrémité de base a atteint un niveau prédéterminé.

8. Un coussin gonflable selon la revendication 7, dans lequel le moyen de cloisonnement (124, 125) est une couture déchirable.

9. Un coussin gonflable selon l'une quelconque des revendications 2 à 8, dans lequel une partie inférieure du moyen de cloisonnement (70) est plus séparée de l'extrémité de base qu'une partie supérieure.

10. Un coussin gonflable selon l'une quelconque des revendications précédentes, comprenant en outre:
- un panneau intérieur (140; 140A; 303, 304; 333, 334, 335; 333S, 334S, 335S; 402, 403) s'étendant d'une extrémité avant de la section droite de coussin gonflable (12; 12Q; 12T) via une surface opposée respective de la section droite de coussin gonflable et de la section gauche de coussin gonflable (14; 14Q; 14T) jusqu'à une extrémité avant de la section gauche de coussin gonflable;
- un panneau extérieur droit (150; 305; 336; 336S; 397) formant une surface externe de la section droite de coussin gonflable (12; 12Q; 12T);
- un panneau extérieur gauche (160; 306; 337; 337S; 398) formant une surface externe de la section gauche de coussin gonflable (14; 14Q; 14T); et
- un panneau d'extrémité de base (170; 302; 338; 393) formant l'extrémité de base du coussin gonflable;
dans lequel la chambre d'extrémité de base est formée par le panneau d'extrémité de base (170; 302; 338; 393).

11. Un coussin gonflable selon la revendication 10, dans lequel
- les bords supérieurs des panneaux extérieurs gauche et droit (150, 160; 305, 306; 336, 337; 336S, 337S; 397, 398) sont raccordés à un bord supérieur du panneau intérieur (140; 140A; 303, 304; 333, 334, 335; 333S, 334S, 335S; 402, 403);
- les bords inférieurs des panneaux extérieurs gauche et droit sont raccordés à un bord inférieur du panneau intérieur;
- les extrémités distales des panneaux extérieurs gauche et droit sont raccordées à une extrémité avant du panneau intérieur; et
- le panneau d'extrémité de base (170; 302; 338; 393) est raccordé aux extrémités de base des panneaux extérieurs gauche et droit, à un bord supérieur d'extrémité de base et un bord inférieur d'extrémité de base du panneau intérieur.

12. Un coussin gonflable selon les revendications 10 ou 11, comprenant en outre un point d'ancrage (83; 87; 332) pour raccorder ensemble une extrémité de base du panneau intérieur (140; 140A; 303, 304; 333, 334, 335; 333S, 334S, 335S; 402, 403) et une base du panneau d'extrémité de base (170; 338).

13. Un coussin gonflable selon l'une quelconque des revendications 10 à 12, comprenant en outre un panneau de raccordement (86) pour raccorder ensemble l'extrémité de base du panneau extérieur gauche (160) et l'extrémité de base du panneau extérieur droit (150), pour diviser l'intérieur du panneau extérieur gauche et l'intérieur du panneau extérieur droit à partir de la chambre d'extrémité de base (17).

14. Un coussin gonflable selon la revendication 12 et la revendication 13, dans lequel le panneau de raccordement (86) et le point d'ancrage (87) sont intégrés en un seul.

15. Un coussin gonflable selon l'une quelconque des revendications 1 à 14, comprenant en outre un coussin à gaz (190; 190A) dans la chambre d'extrémité de base (17; 17A), pour recevoir le gaz provenant du gonfleur (56); dans lequel le coussin à gaz (190, 190A) inclut des ouvertures (192, 194; 198) pour évacuer, dans la section gauche de coussin gonflable (14) et dans la section droite de coussin gonflable (12), respectivement, le gaz provenant de l'intérieur.

16. Un coussin gonflable selon l'une quelconque des revendications précédentes, dans lequel la section gauche de coussin gonflable et la section droite de coussin gonflable sont gonflées par un gonfleur commun (56).

17. Un coussin gonflable selon l'une quelconque des revendications précédentes, comprenant en outre un moyen (130, 131; 330; 390) pour restreindre les largeurs de la section gauche de coussin gonflable (14; 14A-E; 14Q; 14T) et de la section droite de coussin (12; 12A-E; 12Q; 12T) gonflées.

18. Un coussin gonflable selon l'une quelconque des revendications précédentes, dans lequel:
- la section gauche de coussin gonflable (14; 14A-E; 14Q; 14T) et la section droite de coussin gonflable (12; 12A-E; 12Q; 12T) sont agencées de sorte que les extrémités de base respectives des sections gauche et droite de coussin gonflable (14; 14A-E; 12; 12A-E; 12Q; 12T) se gonflent vers l'occupant le long d'une surface supérieure d'un tableau de bord (1); et
- une partie inférieure de l'extrémité distale dans la direction de gonflage de l'extrémité de base dépasse d'un bord de la surface supérieure du tableau de bord (1) adjacente par rapport à l'occupant, dans un état dans lequel la section gauche de coussin gonflable (14; 14A-E; 14Q; 14T) et la section droite de coussin gonflable (12; 12A-E; 12Q; 12T) sont gonflées.

19. Un système de coussin gonflable, comprenant un coussin gonflable, et un gonfleur (56) pour gonfler le coussin gonflable, dans lequel
le coussin gonflable est un coussin gonflable selon l'une quelconque des revendications 1 à 18.

20. Un véhicule comprenant le système de coussin gonflable selon la revendication 19.

21. Un véhicule selon la revendication 20, dans lequel le système de coussin gonflable est un système de coussin gonflable passager monté sur le tableau de bord (1) du véhicule; et l'extrémité arrière de la chambre d'extrémité de base (17; 17A; 17P; 17Q; 17T) du coussin gonflable gonflé est plus proche de l'avant du véhicule que l'extrémité arrière du tableau de bord (1) dans la direction transversale du véhicule.
